# EUROPÄISCHE PATENTSCHRIFT

(11) **EP 2 934 961 B1**
(45) Veröffentlichungstag und Bekanntmachung des Hinweises auf die Patenterteilung: **04.01.2017**
(21) Anmeldenummer: 13795794.0
(22) Anmeldetag: 28.11.2013
(51) Int. Cl.: B60T 7/04, B60T 17/22, B60T 8/40, B60T 13/74

(54) **ELEKTROHYDRAULISCHE FAHRZEUG-BREMSANLAGE UND VERFAHREN ZUM BETREIBEN DERSELBEN**
ELECTROHYDRAULIC MOTOR VEHICLE BRAKE SYSTEM AND METHOD FOR OPERATING THE SAME
SYSTÈME DE FREINAGE ÉLECTROHYDRAULIQUE POUR VÉHICULE ET PROCÉDÉ DE FONCTIONNEMENT

(30) Priorität: 21.12.2012 DE 102012025291
(43) Veröffentlichungstag der Anmeldung: 28.10.2015
(73) Patentinhaber: Lucas Automotive GmbH, 56070 Koblenz (DE)
(72) Erfinder: KNECHTGES, Josef, 56727 Mayen (DE)
(74) Vertreter: Röthinger, Rainer
(86) Internationale Anmeldenummer: PCT/EP2013/074928
(87) Internationale Veröffentlichungsnummer: WO 2014/095287

(56) Entgegenhaltungen:
- EP-A2- 0 933 275
- WO-A1-2012/034661
- WO-A1-2012/152352
- DE-A1-102006 014 269
- DE-A1-102006 050 277
- DE-A1-102008 020 566
- DE-A1-102009 008 944
- DE-A1-102010 002 406
- DE-A1-102010 022 493
- DE-A1-102010 038 704
- DE-A1-102010 055 044

## Beschreibung

### Technisches Gebiet

Die vorliegende Offenbarung betrifft allgemein das Gebiet der Fahrzeug-Bremsanlagen. Konkret wird eine elektrohydraulische Fahrzeug-Bremsanlage mit einem elektromechanischen Aktuator zur Betätigung der Bremsanlage beschrieben.

### Hintergrund

Elektromechanische Aktuatoren finden bereits seit geraumer Zeit in Fahrzeug-Bremsanlagen Verwendung, beispielsweise zur Realisierung einer elektrischen Parkbremsfunktion (EPB). Bei elektromechanischen Bremsanlagen (EMB) ersetzen sie die herkömmlichen Hydraulikzylinder an den Radbremsen.

Aufgrund technischer Fortschritte hat sich die Leistungsfähigkeit der elektromechanischen Aktuatoren fortlaufend erhöht. Es wurde daher in Erwägung gezogen, derartige Aktuatoren auch zur Implementierung moderner Fahrdynamikregelsysteme heranzuziehen. Zu solchen Regelsystemen zählen ein Antiblockiersystem (ABS), eine Antriebsschlupfregelung (ASR) oder ein elektronischen Stabilitätsprogramm (ESP), auch als Fahrzeugstabilitätsregelung (Vehicle Stability Control, VSC) bezeichnet.

Die WO 2006/111393 A lehrt eine elektrohydraulische Bremsanlage mit einem hochdynamischen elektromechanischen Aktuator, der die Druckmodulation im Fahrdynamikregelbetrieb übernimmt. Der in der WO 2006/111393 A beschriebene elektromechanische Aktuator ist dazu vorgesehen, direkt auf einen Hauptzylinder der Bremsanlage einzuwirken. Aufgrund der hohen Dynamik des elektromechanischen Aktuators lassen sich die hydraulischen Komponenten der aus der WO 2006/111393 A bekannten Bremsanlage auf ein einziges 2/2-Wege-Ventil pro Radbremse reduzieren. Zur Realisierung radindividueller Druckmodulationen werden die Ventile dann einzeln oder gruppenweise im Multiplex-Betrieb angesteuert.

Aus der Minimierung auf lediglich ein Ventil pro Radbremse resultieren jedoch auch Herausforderungen, wie ein ungewollter Druckausgleich bei gleichzeitig geöffneten Ventilen. Eine Lösung basierend auf einem hochdynamischen Regelverhalten hierfür wird in der WO 2010/091883 A angegeben.

Die WO 2010/091883 A offenbart eine elektrohydraulische Bremsanlage mit einem Hauptzylinder und einem darin aufgenommenen Tandemkolben. Der Tandemkolben ist mittels eines elektromechanischen Aktuators betätigbar. Der elektromechanische Aktuator umfasst einen konzentrisch zum Tandemkolben angeordneten Elektromotor sowie eine Getriebeanordnung, die eine Rotationsbewegung des Elektromotors in eine Translationsbewegung des Kolbens umsetzt. Die Getriebeanordnung besteht aus einem Kugelgewindetrieb mit einer drehfest mit einem Rotor des Elektromotors gekoppelten Kugelgewindemutter und einer auf den Tandemkolben einwirkenden Kugelgewindespindel.

Eine weitere elektrohydraulische Bremsanlage mit einem auf einen Hauptzylinder-Kolben wirkenden elektromechanischen Aktuator ist aus der WO 2012/152352 A bekannt. Diese Anlage kann in einem regenerativen Modus (Generatorbetrieb) arbeiten.

Die Druckschrift WO 2012/034661 A1 lehrt eine Betätigungsvorrichtung für eine Fahrzeug-Bremsanlage, die eine erste Kolben-Zylinder-Einheit und mindestens eine Arbeitsfläche umfasst, die mit mindestens einer Radbremse des Fahrzeugs über mindestens eine hydraulische Leitung verbunden ist. Die Betätigungsvorrichtung beinhaltet eine weitere Kolben-Zylinder-Einheit, wobei der Kolben mittels der Betätigungsvorrichtung betätigt werden kann und mit einem Kolben der ersten Kolben-Zylinder-Einheit über eine Verbindungsvorrichtung verbunden ist.

Die Druckschrift DE 10 2006 05 02 77 A1 lehrt eine Bremsanlage mit einem Kolben-Zylinder-System zur Druckerzeugung in mindestens einem Arbeitsraum des Kolben-Zylinder-Systems und einem Antrieb zur Verstellung des Kolbens des Kolben-Zylinder-Systems. Eine mechanische Verstellung des Kolbens des Kolben-Zylinder-Systems ist über eine Bremsbetätigungseinrichtung möglich, wie zum Beispiel ein Bremspedal. Der Kolben des Kolben-Zylinder-Systems weist ein erstes Kolbenelement und ein zweites Kolbenelement auf, wobei das erste Kolbenelement von dem Antrieb direkt oder über ein Getriebe verstellbar ist und ein zweites Kolbenelement direkt oder über ein Getriebe von der Bremsbetätigungseinrichtung verstellbar ist.

### Kurzer Abriss

Es sind eine elektrohydraulische Kraftfahrzeug-Bremsanlage sowie ein Verfahren für das Betreiben einer solchen Bremsanlage anzugeben, die eine insbesondere aus Sicherheitsaspekten vorteilhafte Funktionalität aufweisen.

Gemäß einem Aspekt wird ein Verfahren angegeben für das Betreiben einer elektrohydraulischen Kraftfahrzeug-Bremsanlage mit einer aus einem Reservoir mit Hydraulikfluid versorgbaren Zylinder-Kolben-Einrichtung, einem elektromechanischen Aktuator zur Betätigung eines in der Zylinder-Kolben-Einrichtung aufgenommenen Kolbens, einer mit der Zylinder-Kolben-Einrichtung koppelbaren Radbremse und einem zwischen der Zylinder-Kolben-Einrichtung und der Radbremse vorgesehenen Absperrventil. Das Verfahren umfasst die Schritte des Ansteuerns des elektromechanischen Aktuators zum Aufbauen eines Hydraulikdrucks an der Radbremse, des Ansteuerns des Absperrventils zum Einsperren des an der Radbremse bereits aufgebauten Hydraulikdrucks, des Ansteuerns des elektromechanischen Aktuators zum Ansaugen von Hydraulikfluid aus dem Reservoir unter Überwachung eines Zeitverhaltens eines mit dem Ansaugen einhergehenden Druckabfalls in der Zylinder-Kolben-Einrichtung, und des Abbrechens des Ansaugens in Abhängigkeit von einem Ergebnis der Überwachung.

Das Abbrechen des Ansaugens kann mit dem Ziel erfolgen, den Hydraulikdruck in der Zylinder-Kolben-Einrichtung in einem Fehlerfall nicht übermäßig (insbesondere auf einen im Wesentlichen drucklosen oder einen Unterdruck-Zustand) fallen zu lassen. Der Fehlerfall kann anhand des Zeitverhaltens des Druckabfalls in der Zylinder-Kolben-Einrichtung erkannt werden und beispielsweise mit dem Absperrventil, anderen Ventilen oder der Zylinder-Kolben-Einrichtung zusammenhängen.

Zum Abbrechen des Ansaugens kann der elektromechanische Aktuator entsprechend angesteuert werden (z.B. um anstatt eines Ansaughubs eine Förderhub durchzuführen). Alternativ oder zusätzlich hierzu können ein oder mehrere Ventile, einschließlich des Absperrventils oder eines zwischen der Zylinder-Kolben-Einrichtung und dem Reservoir vorgesehenen Ventils) angesteuert werden, bespielweise um im Fehlerfall dem Druckabfall in der Zylinder-Kolben-Einrichtung entgegen zu wirken.

Das Ansteuern des Absperrventils zum Einsperren des Hydraulikdrucks sowie das Ansteuern des elektromechanischen Aktuators zum Ansaugen von Hydraulikfluid können im Zusammenhang mit dem Erfassen einer Notwendigkeit, im Rahmen des Hydraulikdruckaufbaus Hydraulikfluid aus dem Reservoir in die Zylinder-Kolben-Einrichtung anzusaugen, erfolgen. Dabei kann das Ansteuern des Absperrventils dem Ansteuern des elektromechanischen Aktuators vorausgehen. Die Notwendigkeit, Hydraulikfluid aus dem Reservoir in die Zylinder-Kolben-Einrichtung anzusaugen kann im Zusammenhang mit einer Testphase erfasst werden. Alternativ oder zusätzlich hierzu kann die Notwendigkeit eine Kompensation von Fading im Rahmen eines Bremsvorgangs sein. Auch ist es denkbar, dass ein notwendiges Ansaugen damit einhergeht, dass der Kolben sich seinem förderseitigen Anschlag nähert (oder diesen bereits erreicht hat), während der Hydraulikdruck weiter erhöht werden muss.

Gemäß einer Implementierung kann das Ansaugen dann abgebrochen werden, wenn das Ergebnis der Überwachung auf eine mangelnde Funktionsfähigkeit des Absperrventils oder einer Ansteuerung des Absperrventils hinweist. Die mangelnde Funktionsfähigkeit kann anhand eines vorbestimmten Kriteriums oder einer Kombination mehrerer vorbestimmter Kriterien ermittelt werden.

Das Ansaugen kann beispielsweise dann abgebrochen werden, wenn der Druckabfall in der Zylinder-Kolben-Einrichtung langsamer als gemäß einem vorgegebenen zeitlichen Kriterium erfolgt. Das vorgegebene zeitliche Kriterium kann besagen, dass der Druckabfall auf einen im Wesentlichen drucklosen Zustand (z.B. unterhalb von 5 bar oder unterhalb von 1 bar) innerhalb von ungefähr 5 bis 50 ms erfolgen muss. Alternativ oder zusätzlich hierzu kann das Ansaugen unterbrochen werden, bevor der Druckabfall ungefähr 10 bis 40 bar (z.B. ungefähr 20 bar) beträgt.

Im Zusammenhang mit dem Abbrechen (z.B. zeitgleich damit oder im Anschluss daran) kann wenigstens eine weitere Maßnahme eingeleitet werden. Gemäß einer Variante wird das Absperrventil angesteuert, um dieses zu öffnen. Alternativ oder zusätzlich hierzu wird der elektromechanische Aktuator zum Erhöhen des Hydraulikdrucks angesteuert.

Das Verfahren kann im Rahmen einer Testphase durchgeführt werden, in der sich das Fahrzeug im Stillstand befindet. Auf diese Weise lässt sich die Betriebssicherheit der Kraftfahrzeug-Bremsanlage bereits im Vorfeld einer Fahrt ermitteln, und erforderlichenfalls kann eine Fehlermeldung ausgegeben werden. Beispielsweise kann die Testphase im Anschluss an das Einschalten der Zündung aber vor dem Einlegen eines Ganges ablaufen.

Ebenfalls bereitgestellt wird ein Computerprogrammprodukt mit Programmcodemitteln zum Durchführen des hier vorgestellten Verfahrens, wenn das Computerprogrammprodukt auf einen Prozessor abläuft. Das Computerprogrammprodukt kann von einem Kraftfahrzeug-Steuergerät oder Kraftfahrzeug-Steuergerätsystem umfasst ein.

Ein weiterer Aspekt ist auf eine elektrohydraulische Kraftfahrzeug-Bremsanlage gerichtet. Die Bremsanlage umfasst eine aus einem Reservoir mit Hydraulikfluid versorgbare Zylinder-Kolben-Einrichtung, einen elektromechanischen Aktuator zur Betätigung eines in der Zylinder-Kolben-Einrichtung aufgenommenen Kolbens, eine mit der Zylinder-Kolben-Einrichtung koppelbare Radbremse, ein zwischen der Zylinder-Kolben-Einrichtung und der Radbremse vorgesehenes Absperrventil und ein Steuergerät oder Steuergerätesystem, das ausgebildet ist zum Ansteuern des elektromechanischen Aktuators zum Aufbauen eines Hydraulikdrucks an der Radbremse, zum Ansteuern des Absperrventils zum Einsperren des an der Radbremse bereits aufgebauten Hydraulikdrucks, zum Ansteuern des elektromechanischen Aktuators zum Ansaugen von Hydraulikfluid aus dem Reservoir unter Überwachung eines Zeitverhaltens eines mit dem Ansaugen einhergehenden Druckabfalls in der Zylinder-Kolben-Einrichtung, und zum Abbrechen des Ansaugens in Abhängigkeit von einem Ergebnis der Überwachung.

Die Zylinder-Kolben-Einrichtung kann als Hauptzylinder der Kraftfahrzeug-Bremsanlage mit einem darin aufgenommenen Kolben zur Hydraulikdruckerzeugung an den Radbremsen ausgebildet sein. Der Kolben kann als Tandem-Kolben ausgebildet sein, welcher im Hauptzylinder zwei Hydraulikkammern definiert, die jeweils einem Bremskreis der Bremsanlage zuordenbar sind. Der Kolben des Hauptzylinders kann mit dem elektromechanischen Aktuator unmittelbar mechanisch gekoppelt oder koppelbar sein. Bei Kolbenbetätigung wirkt der elektromechanischen Aktuator dann unmittelbar auf den Kolben des Hauptzylinders ein, wodurch dieser in Bewegung gesetzt wird. Alternativ hierzu kann der elektromechanische Aktuator mit einer vom Hauptzylinder verschiedenen (weiteren) Zylinder-Kolben-Einrichtung der Bremsanlage zusammenwirken, welche auslassseitig mit dem Hauptzylinder fluidisch gekoppelt ist. In diesem Fall kann bei Betätigung des elektromechanischen Aktuators in der mit dem elektromechanischen Aktuator zusammenwirkenden Zylinder-Kolben-Einrichtung ein Hydraulikdruck erzeugt werden, welcher (z. B. unmittelbar) auf den Kolben des Hauptzylinders einwirkt und somit zur hydraulischen Betätigung des Kolbens vorgesehen ist.

Ferner kann die Zylinder-Kolben-Einrichtung als eine von einem Hauptzylinder der Bremsanlage verschiedene Zylinder-Kolben-Einrichtung ausgebildet sein, welche mit der Radbremse zum Hydraulikdruckaufbau unmittelbar fluidisch gekoppelt oder koppelbar ist. Diese Kopplung kann über einen oder mehreren hydraulische Bremskreise erfolgen.

Die Bremsanlage kann ferner ein Ventilsystem zur Fahrdynamikregelung umfassen. In diesem Fall kann das Absperrventil zwischen der Zylinder-Kolben-Einrichtung und dem Ventilsystem zur Fahrdynamikregelung angeordnet sein oder ein Teil dieses Ventilsystems sein. Der Multiplexbetrieb kann im Zusammenhang mit einer Fahrdynamikregelung durchgeführt werden. Die Fahrdynamikregelung kann mindestens eines der folgenden Regelsysteme umfassen: ein Antiblockiersystem (ABS), ein Antriebsschlupfregelsystem (ASR) und ein elektronisches Stabilitätsprogramm (ESP, auch Vehicle Stability Control, VSC, genannt).

Die Zylinder-Kolben-Einrichtung kann derart dimensioniert sein, dass sie keine Volumenreserve zur Kompensation von Fading besitzt. Beispielsweise kann der Durchmesser der Zylinder-Kolben-Einrichtung 15 bis 23 mm betragen und ein maximaler Betätigungsweg eines Kolbens 6 bis 10 cm (bei einem Tandem-Kolben 3 bis 5 cm pro Kolben).

Die Vorrichtung kann ferner einen mit einem Bremspedal koppelbaren oder gekoppelten mechanischen Aktuator zur Betätigung des in der Zylinder-Koben-Einrichtung aufgenommenen Kolbens umfassen. Dieser mechanische Aktuator kann für einen Notbremsbetrieb (beispielsweise bei Ausfall des elektromechanischen Aktuators) vorgesehen werden.

Gemäß einer ersten Variante ist bei der hier vorgestellten Bremsanlage der elektromechanische Aktuator zur Betätigung des Kolbens der Zylinder Koben-Einrichtung im Rahmen einer Bremskraftverstärkung ausgebildet. Die zu verstärkende Bremskraft kann in diesem Fall auf den Kolben mittels des mechanischen Aktuators ausgeübt werden. Gemäß einer anderen Variante ist der elektromechanische Aktuator zur Betätigung des Kolbens zur Bremskrafterzeugung ausgebildet. Diese Variante kann beispielsweise im Rahmen eines Brake-By-Wire (BBW)-Betriebs zum Einsatz kommen, in dem das Bremspedal vom Hauptzylinder-Kolben (normalerweise) mechanisch entkoppelt ist. Bei einer für den BBW-Betrieb ausgelegten Bremsanlage kommt der mechanische Aktuator etwa bei Ausfall einer BBW-Komponente (also in einem "pushthrough"-Modus oder bei einer Notbremsung) zur Betätigung des Kolbens zum Einsatz.

Je nach Ausgestaltung der Fahrzeug-Bremsanlage kann ein selektives Entkoppeln des Bremspedals vom Hauptzylinder-Kolben mittels einer Entkoppeleinrichtung geschehen. Bei einer gemäß dem BBW-Prinzip ausgelegten Bremsanlage kann abgesehen von einem Notbremsbetrieb (in dem das Bremspedal über den mechanischen Aktuator mit dem Hauptzylinder-Kolben gekoppelt ist) eine ständige Entkopplung vorgesehen sein. Bei einer regenerativen Bremsanlage kann eine derartige Entkoppelung zumindest im Rahmen eines regenerativen Bremsbetriebs (Generatorbetrieb) erfolgen. Bei anderen Bremsanlagen können die Entkoppeleinrichtung sowie eine damit einhergehende Simulationseinrichtung zur Bereitstellung eines Pedalrückwirkverhaltens auch völlig entfallen.

Zur Ansteuerung des elektromechanischen Aktuators sowie optionaler weiterer Komponenten der Fahrzeug-Bremsanlage kann die Bremsanlage geeignete Ansteuereinrichtungen aufweisen. Diese Ansteuereinrichtungen können elektrische, elektronische oder programmgesteuerte Baugruppen sowie Kombinationen hiervon umfassen. Beispielsweise können die Ansteuereinrichtungen in einem gemeinsamen Steuergerät oder in einem System aus getrennten Steuergeräten (Electronic Control Units, ECUs) bereitgestellt werden.

### Kurze Beschreibung der Zeichnungen

Weitere Vorteile, Aspekte und Einzelheiten der hier vorgestellten hydraulischen Fahrzeug-Bremsanlage ergeben sich aus der nachfolgenden Beschreibung exemplarischer Ausführungsbeispiele sowie aus den Figuren. Es zeigen:
- Fig. 1: ein erstes Ausführungsbeispiel einer elektrohydraulischen FahrzeugBremsanlage;
- Fig. 2: ein zweites Ausführungsbeispiel einer elektrohydraulischen FahrzeugBremsanlage;
- Fig. 3: ein drittes Ausführungsbeispiel elektrohydraulischen FahrzeugBremsanlage;
- Fig. 4: ein viertes Ausführungsbeispiel elektrohydraulischen FahrzeugBremsanlage;
- Fig. 5: ein Ablaufdiagramm, das ein Ausführungsbeispiel eines Verfahrens zum Betreiben der elektrohydraulischen Fahrzeug-Bremsanlage nach einem der vorhergehenden Fign. veranschaulicht; und
- Fign. 6A bis 6D: Diagramme, welche Hydraulikdruckverläufe sowie die Ansteuerung des elektromechanischen Aktuators veranschaulichen.

### Detaillierte Beschreibung

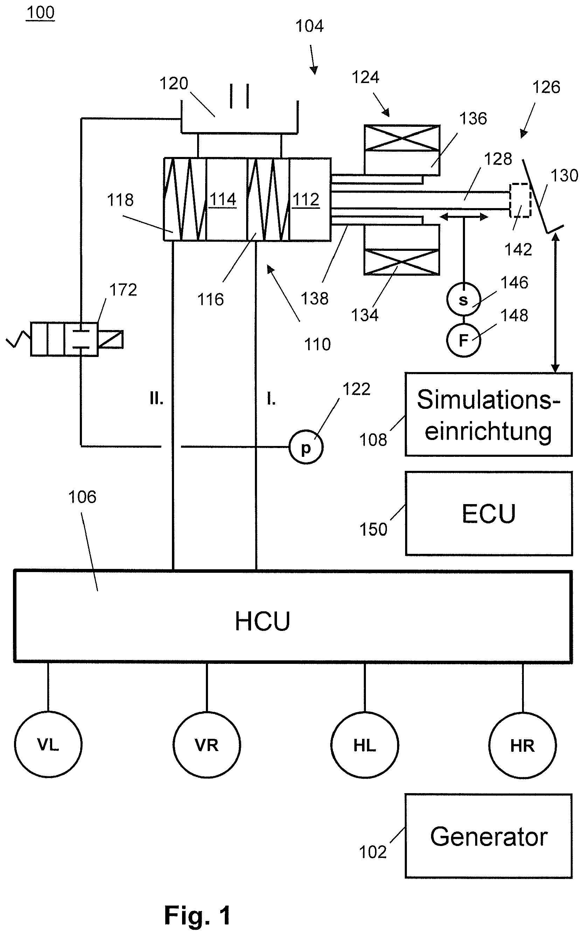

Fig. 1 zeigt ein erstes Ausführungsbeispiel einer hydraulischen Fahrzeug-Bremsanlage 100, die auf dem Brake-By-Wire (BBW)-Prinzip basiert. Die Bremsanlage 100 kann optional (z. B. bei Hybrid-Fahrzeugen) in einem regenerativen Modus betrieben werden. Zu diesen Zweck ist eine elektrische Maschine 102 vorgesehen, die eine Generatorfunktionalität bietet und selektiv mit Rädern und einem Energiespeicher, z.B. einer Batterie (nicht dargestellt), verbunden werden kann.

Wie in Fig. 1 veranschaulicht, umfasst die Bremsanlage 100 eine Hauptzylinder-Baugruppe 104, die an einer Fahrzeug-Spritzwand montiert werden kann. Eine hydraulische Steuereinheit (Hydraulic Control Unit, HCU) 106 der Bremsanlage 100 ist funktional zwischen der Hauptzylinder-Baugruppe 104 und vier Radbremsen VL, VR, HL und HR des Fahrzeugs angeordnet. Die HCU 106 ist als integrierte Baugruppe ausgebildet und umfasst eine Vielzahl von hydraulischen Einzelkomponenten sowie mehrere Fluideinlässe und Fluidauslässe. Ferner ist eine nur schematisch dargestellte Simulationseinrichtung 108 zum Bereitstellen eines Pedalrückwirkungsverhaltens im Betriebsbremsbetrieb vorgesehen. Die Simulationseinrichtung 108 kann auf einem mechanischen oder hydraulischen Prinzip basieren. Im zuletzt genannten Fall kann die Simulationseinrichtung 108 an die HCU 106 angeschlossen sein.

Die Hauptzylinder-Baugruppe 104 weist einen Hauptzylinder 110 mit einem darin verschieblich aufgenommenen Kolben auf. Der Kolben ist im Ausführungsbeispiel als Tandemkolben mit einem Primärkolben 112 und einem Sekundärkolben 114 ausgebildet und definiert im Hauptzylinder 110 zwei voneinander getrennte Hydraulikkammern 116, 118. Die beiden Hydraulikkammern 116, 118 des Hauptzylinders 110 sind zur Versorgung mit Hydraulikfluid über jeweils einen Anschluss mit einem drucklosen Hydraulikfluid-Reservoir 120 verbunden. Jede der beiden Hydraulikkammern 116, 116 ist ferner mit der HCU 106 gekoppelt und definiert jeweils einen Bremskreis I. und II. Im Ausführungsbeispiel ist für den Bremskreis I. ein Hydraulikdrucksensor 122 vorgesehen, der auch in die HCU 106 integriert werden könnte.

Die Hauptzylinder-Baugruppe 104 umfasst ferner einen elektromechanischen Aktuator (d.h. ein elektromechanisches Stellglied) 124 sowie einen mechanischen Aktuator (d.h. ein mechanisches Stellglied) 126. Sowohl der elektromechanische Aktuator 124 als auch der mechanische Aktuator 126 ermöglichen eine Betätigung des Hauptzylinder-Kolbens und wirken dazu auf eine eingangsseitige Stirnfläche dieses Kolbens, genauer gesagt des Primärkolbens 112, ein. Die Aktuatoren 124, 126 sind derart ausgebildet, dass sie unabhängig voneinander (und getrennt oder gemeinsam) den Hauptzylinder-Kolben zu betätigen vermögen.

Der mechanische Aktuator 126 besitzt ein Kraftübertragungselement 128, das stangenförmig ausgebildet ist und unmittelbar auf die eingangsseitige Stirnfläche des Primär-Kolbens 112 einzuwirken vermag. Wie in Fig. 1 gezeigt, ist das Kraftübertragungselement 128 mit einem Bremspedal 130 gekoppelt. Es versteht sich, dass der mechanische Aktuator 126 weitere Komponenten umfassen kann, die funktional zwischen dem Bremspedal 130 und dem Hauptzylinder 110 angeordnet sind. Derartige weitere Komponenten können sowohl mechanischer als auch hydraulischer Natur sein. Im zuletzt genannten Fall ist der Aktuator 126 als hydraulisch-mechanischer Aktuator 126 ausgebildet.

Der elektromechanische Aktuator 124 weist einen Elektromotor 134 sowie ein dem Elektromotor 134 abtriebsseitig nachfolgendes Getriebe 136, 138 auf. Im Ausführungsbeispiel ist das Getriebe eine Anordnung aus einer drehbar gelagerten Mutter 136 und einer mit der Mutter 136 (z.B. über Wälzkörper wie Kugeln) in Eingriff stehenden und in axialer Richtung beweglichen Spindel 138. In anderen Ausführungsbeispielen können Zahnstangengetriebe oder andere Getriebetypen zum Einsatz gelangen.

Der Elektromotor 134 besitzt im vorliegenden Ausführungsbeispiel eine zylindrische Bauform und erstreckt sich konzentrisch zum Kraftübertragungselement 128 des mechanischen Aktuators 126. Genauer gesagt ist der Elektromotor 134 radial außen bezüglich des Kraftübertragungselements 128 angeordnet. Ein Rotor (nicht dargestellt) des Elektromotors 134 ist drehfest mit der Getriebemutter 136 gekoppelt, um diese in Drehung zu versetzen. Eine Drehbewegung der Mutter 136 überträgt sich derart auf die Spindel 138, dass eine axiale Verschiebung der Spindel 138 resultiert. Die in Fig. 1 linke Stirnseite der Spindel 138 kann dabei (ggf. über ein Zwischenglied) in Anlage an die in Fig. 1 rechte Stirnseite des Primärkolbens 112 gelangen und in Folge dessen den Primärkolben 112 (zusammen mit dem Sekundärkolben 114) in Fig. 1 nach links verschieben. Ferner lässt sich die Kolbenanordnung 112, 114 auch von dem sich durch die (als Hohlkörper ausgebildete) Spindel 138 erstreckenden Kraftübertragungselement 128 des mechanischen Aktuators 126 in Fig. 1 nach links verschieben. Ein Verschieben der Kolbenanordnung 112, 114 in Fig. 1 nach rechts wird mittels des in den Hydraulikkammern 116, 118 herrschenden Hydraulikdrucks (bei Loslassen des Bremspedals 130 und ggf. bei motorischem Verschieben der Spindel 138 nach rechts) bewerkstelligt.

In der in Fig. 1 gezeigten Variante der Hauptzylinder-Baugruppe 104 ist der elektromechanische Aktuator 124 derart angeordnet, dass er unmittelbar auf den Kolben (genauer gesagt auf den Primärkolben 112) des Hauptzylinders 110 zum Aufbau eines Hydraulikdrucks an den Radbremsen einwirken kann. Mit anderen Worten wird der Kolben 112 des Hauptzylinders 110 unmittelbar durch den elektromechanischen Aktuator 124 mechanisch betätigt. In einer alternativen Ausgestaltung der Hauptzylinder-Baugruppe 104 kann der Kolben des Hauptzylinders 110 mit Hilfe des elektromechanischen Aktuators 124 hydraulisch betätigt werden (in Fig. 1 nicht dargestellt). In diesem Fall kann der Hauptzylinder 110 mit einer weiteren, mit dem elektromechanischen Aktuator 124 zusammenwirkenden Zylinder-Kolben-Einrichtung fluidisch gekoppelt sein. Konkret kann die mit dem elektromechanischen Aktuator 124 gekoppelte Zylinder-Kolben-Einrichtung auslassseitig mit dem Primärkolben 112 des Hauptzylinders 110 derart fluidisch gekoppelt sein, dass ein in der Zylinder-Kolben-Einrichtung erzeugter Hydraulikdruck unmittelbar auf den Primärkolben 112 wirkt und somit zu einer Betätigung des Primärkolbens 112 im Hauptzylinder 110 führt. Der Primärkolben 112 wird dann in einer Realisierung aufgrund des einwirkenden Hydraulikdrucks im Hauptzylinder 110 so weit verschoben (Verschiebung nach links in Fig. 1), bis der in den Hauptzylinder-Kammern 116, 118 erzeugte Hydraulikdruck dem in der zusätzlichen Zylinder-Kolben-Einrichtung erzeugten Hydraulikdruck entspricht.

Wie in Fig. 1 gezeigt, ist eine Entkoppeleinrichtung 142 funktional zwischen dem Bremspedal 130 und dem Kraftübertragungselement 128 vorgesehen. Die Entkoppeleinrichtung 142 ermöglicht ein selektives Entkoppeln des Bremspedals 130 von der Kolbenanordnung 112, 114 im Hauptzylinder 110, beispielsweise durch Unterbrechung eines Kraftübertragungswegs. Nachfolgend werden die Funktionsweisen der Entkoppeleinrichtung 142 und der Simulationseinrichtung 108 näher erläutert. In diesem Zusammenhang ist darauf hinzuweisen, dass die in Fig. 1 dargestellt Bremsanlage 100 auf dem Prinzip des Brake-By-Wire (BBW) basiert. Dies bedeutet, dass im Rahmen einer normalen Betriebsbremsung sowohl die Entkoppeleinrichtung 142 als auch die Simulationseinrichtung 108 aktiviert sind. Demgemäß ist das Bremspedal 130 vom Kraftübertragungselement 128 (und damit von der Kolbenanordnung 112, 114 im Hauptzylinder 110) entkoppelt, und eine Betätigung der Kolbenanordnung 112, 114 kann ausschließlich über den elektromechanischen Aktuator 124 erfolgen. Das gewohnte Pedalrückwirkverhalten wird in diesem Fall von der mit dem Bremspedal 130 gekoppelten Simulationseinrichtung 108 bereitgestellt.

Im Rahmen der Betriebsbremsung übernimmt damit der elektromechanische Aktuator 124 die Bremskrafterzeugungsfunktion. Eine durch Niedertreten des Bremspedals 130 angeforderte Bremskraft wird dabei dadurch erzeugt, dass mittels des Elektromotors 134 die Spindel 138 in Fig. 1 nach links verschoben und dadurch auch der Primärkolben 112 und der Sekundär-Kolben 114 des Hauptzylinders 110 nach links bewegt werden. Auf diese Weise wird Hydraulikfluid aus den Hydraulikkammern 116, 118 über die HCU 106 zu den Radbremsen VL, VR, HL und HR gefördert.

Die Höhe der daraus resultierenden Bremskraft der Radbremsen VL, VR, HL und HR wird in Abhängigkeit einer sensorisch erfassten Bremspedalbetätigung eingestellt. Zu diesem Zweck sind ein Wegsensor 146 und ein Kraftsensor 148 vorgesehen, deren Ausgangssignale von einem den Elektromotor 134 ansteuernden Steuergerät (Electronic Control Unit, ECU) 150 ausgewertet werden. Der Wegsensor 146 erfasst einen mit einer Betätigung des Bremspedals 130 in Zusammenhang stehenden Betätigungsweg, während der Kraftsensor 148 eine damit in Zusammenhang stehende Betätigungskraft erfasst. In Abhängigkeit von den Ausgangssignalen der Sensoren 146, 148 (sowie ggf. des Drucksensors 122) wird vom Steuergerät 150 ein Ansteuersignal für den Elektromotor 134 erzeugt.

Nachdem die Vorgänge bei einer Betriebsbremsung näher erläutert wurden, wird jetzt kurz der Notbremsbetrieb ("push-through"-Modus) geschildert. Der Notbremsbetrieb ist beispielsweise die Folge des Ausfalls der Fahrzeugbatterie oder einer Komponente des elektromechanischen Aktuators 124. Eine Deaktivierung der Entkoppeleinrichtung 142 (und der Simulationseinrichtung 108) im Notbremsbetrieb ermöglicht eine direkte Koppelung des Bremspedals 130 mit dem Hauptzylinder 110, nämlich über das Kraftübertragungselement 128. Die Notbremsung wird eingeleitet durch Niedertreten des Bremspedals 130. Die Bremspedalbetätigung überträgt sich dann über das Kraftübertragungselement 128 auf den Hauptzylinder 110. In Folge dessen verschiebt sich die Kolbenanordnung 112, 114 in Fig. 1 nach links. Dadurch wird zur Bremskrafterzeugung Hydraulikfluid aus den Hydraulikkammern 116, 118 des Hauptzylinders 110 über die HCU 106 zu den Radbremsen VL, VR, HL und HR gefördert.

Gemäß einer ersten Ausführungsform besitzt die HCU 106 in Bezug auf den Fahrdynamikregelbetrieb (Bremsregelfunktionen wie ABS, ASR, ESP, etc.) einen im Prinzip herkömmlichen Aufbau mit insgesamt 12 Ventilen (zusätzlich zu Ventilen, die beispielsweise im Zusammenhang mit der Aktivierung bzw. Deaktivierung der Entkoppeleinrichtung 142 und der Simulationseinrichtung 108 verwendet werden). Da der elektromechanische Aktuator 124 dann (ggf. ausschließlich) im Rahmen einer Bremskrafterzeugung angesteuert wird, werden die zusätzlichen Regelfunktionen in bekannter Weise mittels der HCU 106 (und ggf. einem separaten Hydraulikdruckerzeuger wie einer Hydraulikpumpe) bewerkstelligt. Es kann aber auch auf einen Hydraulikdruckerzeuger in der HCU 106 verzichtet werden. Der elektromechanische Aktuator 124 übernimmt dann zusätzlich noch die Druckmodulation im Rahmen des Regelbetriebs. Ein entsprechender Regelmechanismus wird hierzu in das für den elektromechanischen Aktuator 124 vorgesehene Steuergerät 150 implementiert werden.

Wie in Fig. 1 dargestellt, umfasst die Bremsanlage 100 ferner ein Ventil 172, das als Absperrventil ausgebildet ist und in die HCU 106 integriert werden kann. Das Ventil 172 ist funktional zwischen der Hydraulikkammer 116 und dem drucklosen Hydraulikfluidreservoir 120 vorgesehen. In manchen Ausführungsformen kann ein weiteres derartiges Ventil (nicht dargestellt) funktional zwischen der anderen Hydraulikkammer 118 und dem Reservoir 120 vorhanden sein. Allgemein ist das Ventil 172 zwischen dem Hauptzylinder 110 und dem Reservoir vorgesehen.

Das Ventil 172 ermöglicht ein Nachfüllen der Hydraulikkammern 116, 118. Ein solches Nachfüllen ist beispielsweise dann erforderlich, wenn während eines laufenden Bremsvorgangs das Hydraulikfluid aus den Hydraulikkammern 116, 118 praktisch vollständig entnommen wurde (d.h. die Kolben 112, 114 sich ihrem Anschlag in Fig. 1 links nähern) und trotzdem der Hydraulikdruck weiter gesteigert werden muss.

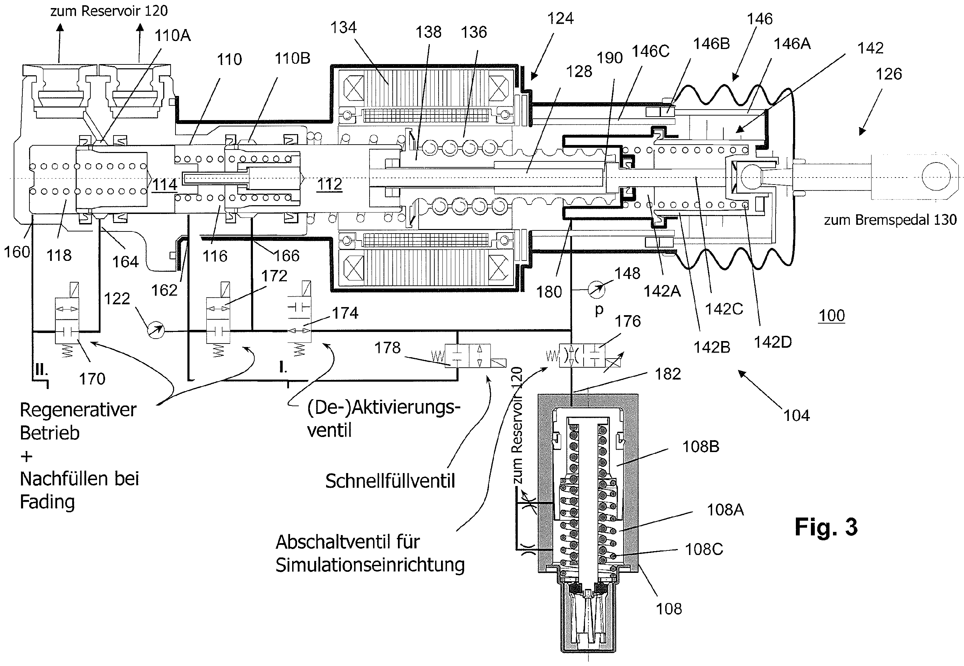

Zum Nachfüllen werden die Radbremsen VL, VR, HL und HR über zugeordnete Ventile der HCU 106 (in Fig. 1 nicht dargestellt) fluidisch von den Hydraulikkammern 116, 118 getrennt. Der an den Radbremsen VL, VR, HL und HR herrschende Hydraulikdruck wird also "eingesperrt". Daraufhin wird das Ventil 172 geöffnet. Bei einem anschließenden Rückhub der Kolben 112, 114 (in Fig. 3 nach rechts) wird dann Hydraulikfluid aus dem drucklosen Reservoir 120 in beiden Kammern 116, 118 gesaugt (aufgrund der schwimmenden Hauptzylinder-Kolben 112, 114). Schließlich können das Ventil 172 wieder geschlossen und die Hydraulikverbindung zu wenigstens einer der Radbremsen VL, VR, HL und HR wieder geöffnet werden. Bei einem nachfolgenden Förderhub der Kolben 112, 114 (in Fig. 1 nach links) wird dann der vormals "eingesperrte" Hydraulikdruck weiter erhöht.

Das Ventil 172 kann ferner für den regenerativen Bremsbetrieb und zum Hydraulikdruckabbau bei Systemfehlern verwendet werden. Diese Verwendungen werden später näher erläutert.

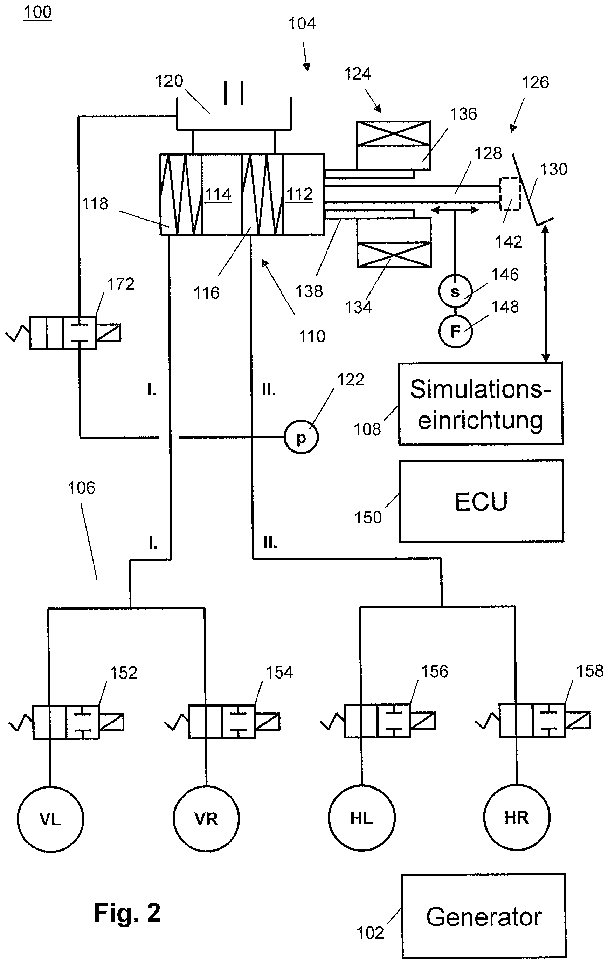

Bei einer weiteren Ausführungsform gemäß Fig. 2 können in der HCU 106 die speziellen Ventile für den Fahrdynamikregelbetrieb (z.B. den ASR- und ESP-Betrieb) bis auf vier Ventile 152, 154, 156, 158 entfallen. Bei dieser anderen Ausführungsform der HCU 106 kann also auf die aus der WO 2010/091883 A oder WO 2011/141158 A (vgl. Fig. 15) bekannte Ventilanordnung mit lediglich vier Ventilen 152, 154, 156, 158 (und der entsprechenden Ansteuerung) zurückgegriffen werden. Auch die Hydraulikdruckmodulation im Regelbetrieb erfolgt dann mittels des elektromechanischen Aktuators 124. Mit anderen Worten wird der elektromechanische Aktuator 124 in diesem Fall nicht nur zur Bremskrafterzeugung im Rahmen einer Betriebsbremsung, sondern auch beispielsweise zum Zweck der Fahrdynamikregelung (also z.B. im ABS-und/oder ASR- und/oder ESP-Regelbetrieb) angesteuert. Zusammen mit der Ansteuerung des elektromechanischen Aktuators 124 erfolgt eine radindividuelle oder radgruppenindividuelle Ansteuerung der Ventile 152, 154, 156, 158 im Multiplexbetrieb. In der in Fig. 2 gezeigten Implementierung sind zwischen den Ventilen 152, 154, 156, 158 und dem Hauptzylinder keine weiteren Ventile für Fahrdynamikregelzwecke vorhanden.

Der Multiplex-Betrieb kann ein Zeitmultiplexbetrieb sein. Dabei können allgemein einzelne Zeitschlitze vorgegeben werden. Einem einzelnen Zeitschlitz wiederum können eines oder mehrere der Ventile 152, 154, 156, 158 zugeordnet sein, die während des entsprechenden Zeitschlitzes ein- oder mehrfach betätigt werden (beispielsweise durch Änderung des Schaltzustands von geöffnet nach geschlossen und/oder umgekehrt). Gemäß einer Realisierung ist jedem der Ventile 152, 154, 156, 158 genau ein Zeitschlitz zugeordnet. Einer oder mehreren weiteren Ventilanordnungen (in Fig. 2 nicht dargestellt) können ein oder mehrere weitere Zeitschlitze zugeordnet sein.

Im Multiplexbetrieb können beispielsweise zunächst mehrere oder alle der Ventile 152, 154, 156, 158 geöffnet sein und gleichzeitig mittels des elektromechanischen Aktuators 124 ein Hydraulikdruck an mehreren oder allen zugeordneten Radbremsen VL, VR, HL und HR aufgebaut werden. Bei Erreichen eines radindividuellen Zieldrucks schließt dann das entsprechende Ventil 152, 154, 156, 158 zeitschlitz-synchron, während eines oder mehrere weitere Ventile 152, 154, 156, 158 so lange weiterhin geöffnet bleiben, bis auch dort der jeweilige Zieldruck erreicht ist. Die vier Ventile 152, 154, 156, 158 werden daher im Multiplexbetrieb individuell pro Rad oder Radgruppe in Abhängigkeit des jeweiligen Zieldrucks geöffnet und geschlossen.

Gemäß einer Ausführung sind die Ventile 152, 154, 156, 158 als 2/2-Wege-Ventile realisiert und beispielsweise als nichtregelbare Absperrventile ausgebildet. In diesem Fall kann daher kein Öffnungsquerschnitt eingestellt werden, wie es beispielsweise bei Proportionalventilen der Fall wäre. In einer anderen Ausführung sind die Ventile 152, 154, 156, 158 als Proportionalventile mit einstellbarem Öffnungsquerschnitt realisiert.

Fig. 3 zeigt ein detaillierteres Ausführungsbeispiel einer Fahrzeug-Bremsanlage 100, welche auf dem im Zusammenhang mit den schematischen Ausführungsbeispielen der Fign. 1 und 2 erläuterten Funktionsprinzip basiert. Gleiche oder ähnliche Elemente wurden dabei mit den gleichen Bezugszeichen wie in den Fign. 1 und 2 versehen, und auf deren Erläuterung wird nachfolgend verzichtet. Der Klarheit halber wurden die ECU, die Radbremsen, die den Radbremsen zugeordneten Ventileinheiten der HCU und der Generator für den regenerativen Bremsbetrieb nicht dargestellt.

Auch die in Fig. 3 veranschaulichte Fahrzeug-Bremsanlage 100 umfasst zwei Bremskreise I. und II., wobei zwei Hydraulikkammern 116, 118 eines Hauptzylinders 110 jeweils wiederum genau einem Bremskreis I., II. zugeordnet sind. Der Hauptzylinder 110 besitzt pro Bremskreis I., II. zwei Anschlüsse. Die beiden Hydraulikkammern 116, 118 münden dabei jeweils in einen ersten Anschluss 160, 162, über den Hydraulikfluid aus der jeweiligen Kammer 116, 118 in den zugeordneten Bremskreis I., II. gefördert werden kann. Ferner kann jeder der Bremskreise I. und II. über jeweils einen zweiten Anschluss 164, 166, der in eine entsprechende Ringkammer 110A, 110B im Hauptzylinder 110 mündet, mit dem in Fig. 3 nicht dargestellten drucklosen Hydraulikfluid-Reservoir (Bezugszeichen 120 in Fig. 1) verbunden werden.

Zwischen dem jeweils ersten Anschluss 160, 162 und dem jeweils zweiten Anschluss 164, 166 des Hauptzylinders 110 ist jeweils ein Ventil 170, 172 vorgesehen, das im Ausführungsbeispiel als ein 2/2-Wege-Ventil realisiert ist. Mittels der Ventile 170, 172 können die ersten und zweiten Anschlüsse 160, 162, 164, 166 selektiv miteinander verbunden werden. Dies entspricht einem "hydraulischer Kurzschluss" zwischen dem Hauptzylinder 110 einerseits und, auf der anderen Seite, dem drucklosen Hydraulikfluidreservoir (welches dann über die Ringkammern 110A, 110B mit den Hydraulikkammern 116, 118 verbunden wird). In diesem Zustand können die Kolben 112, 114 im Hauptzylinder 110 im Wesentlichen widerstandsfrei durch den elektromechanischen Aktuator 124 oder den mechanischen Aktuator 126 verschoben werden ("Leerwegfreischaltung"). Die beiden Ventile 170, 172 ermöglichen so beispielsweise einen regenerativen Bremsbetrieb (Generatorbetrieb). Hier wird das bei einer Förderbewegung im Hauptzylinder 110 aus den Hydraulikkammern 116, 118 verdrängte Hydraulikfluid dann nicht zu den Radbremsen geleitet, sondern zum drucklosen Hydraulikfluidreservoir, ohne dass es zu einem (im regenerativen Bremsbetrieb in der Regel unerwünschten) Hydraulikdruckaufbau an den Radbremsen käme. Eine Bremswirkung wird im regenerativen Bremsbetrieb dann durch den Generator (vgl. Bezugszeichen 102 in den Fign. 1 und 2) erzielt.

Es ist darauf hinzuweisen, dass der regenerative Bremsbetrieb achsweise implementiert sein kann. Daher kann im Fall einer achsbezogenen Bremskreisaufteilung im regenerativen Bremsbetrieb eines der beiden Ventile 170, 172 geschlossen und das andere geöffnet sein.

Die beiden Ventile 170, 172 ermöglichen ferner den Abbau von Hydraulikdruck an den Radbremsen. Ein solcher Druckabbau kann bei Ausfall (z.B. einer Blockierung) des elektromechanischen Aktuators 124 erwünscht sein oder im Fahrdynamikregelbetrieb, um einen Rückhub des elektromechanischen Aktuators 124 zu vermeiden (z.B. um eine Rückwirkung auf das Bremspedal zu vermeiden). Auch zum Druckabbau werden die beiden Ventile 170, 172 in ihre geöffnete Stellung übergeführt, wodurch Hydraulikfluid aus den Radbremsen über die Ringkammern 110A, 110B im Hauptzylinder 110 in das Hydraulikfluid-Reservoir zurückströmen kann.

Schließlich ermöglichen die Ventile 170, 172 auch noch ein Nachfüllen der Hydraulikkammern 116, 118. Ein solches Nachfüllen kann während eines laufenden Bremsvorgangs erforderlich werden (z.B. aufgrund von so genanntem Bremsen-"Fading"). Zum Nachfüllen werden die Radbremsen über zugeordnete Ventile der HCU (in Fig. 3 nicht dargestellt) fluidisch von den Hydraulikkammern 116, 118 getrennt. Der an den Radbremsen herrschende Hydraulikdruck wird also "eingesperrt". Daraufhin werden die Ventile 170, 172 geöffnet. Bei einem anschließenden Rückhub der im Hauptzylinder 110 vorgesehen Kolben 112, 114 (in Fig. 3 nach rechts) wird dann Hydraulikfluid aus dem drucklosen Reservoir in die Kammern 116, 118 gesaugt. Schließlich können die Ventile 170, 172 wieder geschlossen und die Hydraulikverbindungen zu den Radbremsen wieder geöffnet werden. Bei einem nachfolgenden Förderhub der Kolben 112, 114 (in Fig. 3 nach links) kann dann der vormals "eingesperrte" Hydraulikdruck weiter erhöht werden.

Wie in Fig. 3 gezeigt, basieren im vorliegenden Ausführungsbeispiel sowohl eine Simulationseinrichtung 108 als auch eine Entkoppeleinrichtung 142 auf einem hydraulischen Prinzip. Beide Einrichtungen 108, 142 umfassen jeweils einen Zylinder 108A, 142A zur Aufnahme von Hydraulikfluid sowie einen im jeweiligen Zylinder 108A, 142A aufgenommenen Kolben 108B, 142B. Der Kolben 142B der Entkoppeleinrichtung ist 142 ist mechanisch mit einem in Fig. 3 nicht dargestellten Bremspedal (vgl. Bezugszeichen 130 in den Fign. 1 und 2) gekoppelt. Ferner besitzt der Kolben 142B einen sich durch den Zylinder 142A in axialer Richtung hindurch erstreckenden Fortsatz 142C. Der Kolbenfortsatz 142C verläuft koaxial zu einem Kraftübertragungselement 128 für den Primärkolben 112 und ist diesem in Betätigungsrichtung des Bremspedals vorgelagert.

Jeder der beiden Kolben 108B, 142B wird von einem elastischen Element 108C, 142D (hier jeweils einer Schraubenfeder) in seine Ausgangsstellung vorgespannt. Die Kennlinie des elastischen Elements 108C der Simulationseinrichtung 108 definiert hierbei das gewünschte Pedalrückwirkverhalten.

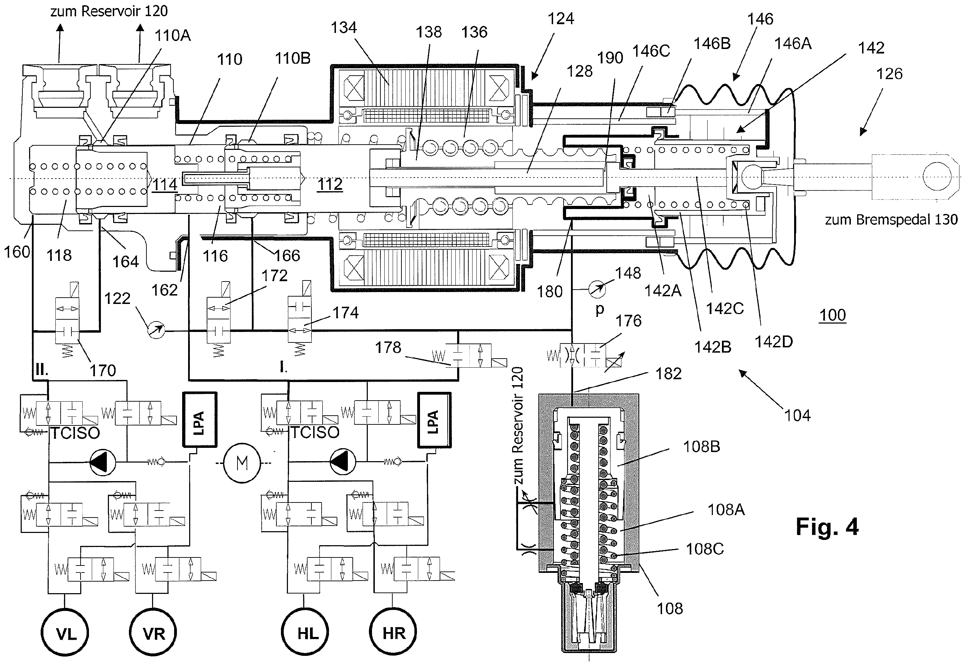

Wie ferner in Fig. 3 gezeigt, umfasst die Fahrzeug-Bremsanlage 100 im vorliegenden Ausführungsbeispiel drei weitere Ventile 174, 176, 178, die hier als 2/2-Wege-Ventile realisiert sind. Es versteht sich, dass einzelne oder alle dieser drei Ventile 174, 176, 178 bei anderen Ausführungsformen, bei denen die entsprechenden Funktionalitäten nicht erforderlich sind, entfallen können. Ferner versteht sich, dass alle diese Ventile Teil eines einzigen HCU-Blocks (vgl. Bezugszeichen 106 in den Fign. 1 und 2) sein können. Dieser HCU-Block kann weitere Ventile umfassen (vgl. Fig. 4 weiter unten).

Das erste Ventil 174 ist einerseits zwischen der Entkoppeleinrichtung 142 (über einen im Zylinder 142A vorgesehenen Anschluss 180) sowie der Simulationseinrichtung 108 (über einen im Zylinder 108A vorgesehenen Anschluss 182) und andererseits dem drucklosen Hydraulikfluidreservoir (über den Anschluss 166 des Hauptzylinders 110) vorgesehen. Dem Anschluss 182 des Zylinders 108A ist das zweite Ventil 176 vorgeschaltet, das in seiner Durchlass-Stellung eine Drosselcharakteristik aufweist. Das dritte Ventil 178 schließlich ist zwischen der Hydraulikkammer 116 (über den Anschluss 116) und dem Bremskreis I. einerseits und dem Zylinder 142A der Entkoppeleinrichtung 142 (über den Anschluss 180) andererseits vorgesehen.

Das erste Ventil 174 ermöglicht eine selektive Aktivierung und Deaktivierung der Entkoppeleinrichtung 142 (und indirekt auch der Simulationseinrichtung 108). Befindet sich das Ventil 174 in seiner geöffneten Stellung, ist die der Zylinder 142A der Entkoppeleinrichtung 142 hydraulisch mit dem drucklosen Hydraulikreservoir verbunden. In dieser Stellung ist die Entkoppeleinrichtung 142 entsprechend dem Notbremsbetrieb deaktiviert. Ferner ist auch die Simulationseinrichtung 108 deaktiviert.

Das Öffnen des Ventils 174 bewirkt, dass bei Verschieben des Kolbens 142B (infolge einer Betätigung des Bremspedals) das im Zylinder 142A aufgenommene Hydraulikfluid weitgehend widerstandsfrei in das drucklose Hydraulikfluidreservoir gefördert werden kann. Dieser Vorgang ist im Wesentlichen unabhängig von der Stellung des Ventils 176, da dieses auch in seiner geöffneten Stellung eine signifikante Drosselwirkung besitzt. Somit ist bei geöffneter Stellung des Ventils 174 auf indirekte Weise auch die Simulationseinrichtung 108 deaktiviert.

Bei einer Bremspedalbetätigung im geöffneten Zustand des Ventils 174 überwindet der Kolbenfortsatz 142C einen Spalt 190 hin zum Kraftübertragungselement 128 und gelangt infolgedessen in Anlage an das Kraftübertragungselement 128. Das Kraftübertragungselement 128 wird nach Überwindung des Spalts 190 von der Verschiebung des Kolbenfortsatzes 142C erfasst und betätigt daraufhin den Primärkolben 112 (sowie - indirekt - den Sekundärkolben 114) im Hauptbremszylinder 110. Dies entspricht der bereits im Zusammenhang mit der Fig. 1 erläuterten direkten Kopplung von Bremspedal und Hauptzylinderkolben zum Hydraulikdruckaufbau in den Bremskreisen I., II. im Notbremsbetrieb.

Bei geschlossenem Ventil 174 (und geschlossenem Ventil 178) ist die Entkoppeleinrichtung 142 hingegen aktiviert. Dies entspricht dem Betriebsbremsbetrieb. Dabei wird bei einer Betätigung des Bremspedals Hydraulikfluid aus dem Zylinder 142A in den Zylinder 108A der Simulationseinrichtung 108 gefördert. Auf diese Weise wird der Simulator-Kolben 108B gegen die vom elastischen Element 108C bereit gestellte Gegenkraft verschoben, so dass sich das gewohnte Pedalrückwirkverhalten einstellt. Gleichzeitig wird der Spalt 190 zwischen dem Kolbenfortsatz 142C und dem Kraftübertragungselement 128 weiter aufrechterhalten. Dadurch ist das Bremspedal vom Hauptzylinder mechanisch entkoppelt.

Im vorliegenden Ausführungsbeispiel erfolgt die Aufrechterhaltung des Spalts 190 dadurch, dass mittels des elektromechanischen Aktuators 124 der Primärkolben 112 wenigstens so schnell in Fig. 3 nach links bewegt wird, wie sich der Kolben 142B aufgrund der Bremspedalbetätigung nach links bewegt. Da das Kraftübertragungselement 128 mechanisch oder anderweitig (z.B. magnetisch) mit dem Primärkolben 112 gekoppelt ist, bewegt sich das Kraftübertragungselement 128 zusammen mit dem Primärkolben 112 bei dessen Betätigung mittels der Getriebespindel 138. Diese Mitnahme des Kraftübertragungselements 128 gestattet die Aufrechterhaltung des Spalts 190.

Die Aufrechterhaltung des Spalts 190 im Betriebsbremsbetrieb erfordert eine präzise Erfassung des vom Kolben 142B zurückgelegten Wegs (und damit des Pedalwegs). Zu diesem Zweck ist ein auf einem magnetischen Prinzip basierender Wegsensor 146 vorgesehen. Der Wegsensor 146 umfasst einen starr mit dem Kolben 142B gekoppelten Stößel 146A, an dessen Ende ein Magnetelement 146B angebracht ist. Die Bewegung des Magnetelements 146B (d.h. der vom Stößel 146B bzw. Kolben 142B zurückgelegte Weg) wird mittels eines Hallsensors 146C erfasst. Ein Ausgangssignal des Hallsensors 146C wird von einer in Fig. 3 nicht gezeigten Steuereinheit (vgl. Bezugszeichen 150 in den Fign. 1 und 2) ausgewertet. Basierend auf dieser Auswertung kann dann der elektromechanische Aktuator 124 angesteuert werden.

Nun zum zweiten Ventil 176, welches der Simulationseinrichtung 108 vorgeschaltet ist und in manchen Ausführungsformen entfallen kann. Diese Ventil 176 besitzt eine vorgegebene oder einstellbare Drosselfunktion. Mittels der einstellbaren Drosselfunktion lässt sich beispielsweise eine Hysterese oder anderweitige Kennlinie für das Pedalrückwirkverhalten erzielen. Ferner kann durch selektives Sperren des Ventils 176 die Bewegung des Kolbens 142B (bei geschlossenen Ventilen 174, 178) und damit der Bremspedalweg begrenzt werden.

Das dritte Ventil 178 ermöglich in seiner geöffneten Stellung das Fördern von Hydraulikfluid aus dem Kolben 142A in den Bremskreis I. bzw. die Hydraulikkammer 116 des Hauptzylinders 110 und umgekehrt. Eine Fluidförderung aus dem Kolben 142A in den Bremskreis I. ermöglicht beispielsweise ein schnelles Anbremsen (z.B. vor dem Einsetzen der Förderwirkung des elektromechanischen Aktuators 124), wobei das Ventil 178 umgehend wieder geschlossen wird. Ferner lässt sich bei geöffnetem Ventil 178 eine hydraulische Rückwirkung (z.B. einer mittels des elektromechanischen Aktuators 124 erzeugten Druckmodulation im Fahrdynamikregelbetrieb) über den Kolben 142B auf das Bremspedal erzielen.

In einer in den Anschluss 180 des Zylinders 142A mündenden Hydraulikleitung ist ein Drucksensor 148 vorgesehen, dessen Ausgangssignal einen Rückschluss auf die Betätigungskraft am Bremspedal gestattet. Das Ausgangssignal dieses Drucksensors 148 wird von einer in Fig. 3 nicht gezeigte Steuereinheit ausgewertet. Basierend auf dieser Auswertung kann dann eine Ansteuerung eines oder mehrerer der Ventile 170, 172, 174, 176, 178 zur Realisierung der oben geschilderten Funktionalitäten erfolgen. Ferner kann basierend auf dieser Auswertung der elektromechanische Aktuator 124 angesteuert werden.

Bei der in Fig. 3 gezeigten Bremsanlage 100 kann die in Fig. 1 dargestellte HCU 106 verwendet werden. Eine beispielhafte Realisierung dieser HCU 106 für die Bremsanlage 100 gemäß Fig. 3 ist in Fig. 4 gezeigt. Hier sind insgesamt 12 (zusätzliche) Ventile zur Realisierung der Fahrdynamikregelfunktionen vorgesehen sowie eine zusätzliche Hydraulikpumpe. In einer alternativen Ausführungsform kann für die in Fig. 3 gezeigten Bremsanlage 100 auch die Multiplex-Anordnung gemäß Fig. 2 (mit insgesamt vier Ventilen zusätzlich zu den in Fig. 3 veranschaulichten Ventilen) zum Einsatz gelangen.

Bei den vorstehend beschriebenen Ausführungsbeispielen wird die Hauptzylindergröße, und damit das maximal förderbare Volumen an Hydraulikfluid, so gewählt, dass bei einem vorgegebenen Pedalübersetzungsverhältnis (Weg/Kraft) bei 500 N Pedalkraft noch eine Fahrzeugverzögerung von ungefähr 0,6 g erreichbar ist. Diese Anforderung führt zu einem typischen Durchmesser des Hauptzylinders 110 von ungefähr 18 bis 20 mm. Um bei einem derartigen Hauptzylinderdurchmesser eine genügende Reserve an Hydraulikfluidvolumen bereitzustellen, müsste der Hauptzylinderhub unverhältnismäßig lang gewählt werden. Oftmals wird daher auf übermäßige Volumenreserven, die nur in Spezialfällen (z.B. bei Fading) benötigt werden, verzichtet. Die Bremsanlage 100 muss daher bei zusätzlichem Volumenbedarf, wie oben erläutert, Hydraulikfluid aus dem drucklosen Reservoir 120 in den Hauptzylinder 110 nachzufüllen.

Ein Nachfüllen wird dann erforderlich, wenn beispielsweise während eines laufenden Bremsvorgangs erkannt wird, dass das in den Hydraulikkammern 116, 118 (noch) vorhandene Volumen an Hydraulikfluid nicht ausreicht, um den Hydraulikdruck an einer, mehreren oder allen der Radbremsen VL, VR, HL und HR weiter zu erhöhen.

Während des Nachfüllvorgangs fällt der Hydraulikdruck im Hauptzylinder 110 kurzzeitig stark ab. Andererseits muss der an den Radbremsen VL, VR, HL und HR bereits aufgebaute Hydraulikdruck aufrechterhalten werden. Aus diesem Grund werden in der HCU 106 vorgesehene Absperrventile (z.B. die Multiplex-Ventile 152, 154, 156 und 158 gemäß Fig. 2 oder die TCISO-Ventile gemäß Fig. 4) geschlossen, um den Hydraulikdruck an den Radbremsen, VL, VR, HL und HR einzuschließen. In diesem Zusammenhang ist sowohl eine Funktionsfähigkeit dieser Absperrventile als auch ihrer Ansteuerung (insbesondere hinsichtlich des Steuergeräts 150) zu gewährleisten. Andernfalls bestünde die Gefahr, dass im Rahmen des Ansaugvorganges im Hauptzylinder 110 der Hydraulikdruck an einer oder mehreren der Radbremsen VL, VR, HL, HR einbricht und damit die Fahrzeugverzögerung abnimmt.

So sollte ihm Fehlerfall die Verzögerungsabnahme nicht mehr als 0,1 bis 0,3 g innerhalb von ungefähr 200 ms betragen. Aus diesem Grund muss noch während des Reduzierens des Hydraulikdrucks im Hauptzylinder 110 nach Einleiten des Nachfüllvorgangs ein fehlerhaftes Nicht-Schließen von Absperrventilen zu den Radbremsen VL, VR, HL und HR erkannt werden. Eine derartige Erkennung hat stattzufinden, bevor der Druckabfall im Hauptzylinder 110 ungefähr 20 bar (das entspräche einer Verzögerungsabnahme von ungefähr 0,2 g) erreicht hat.

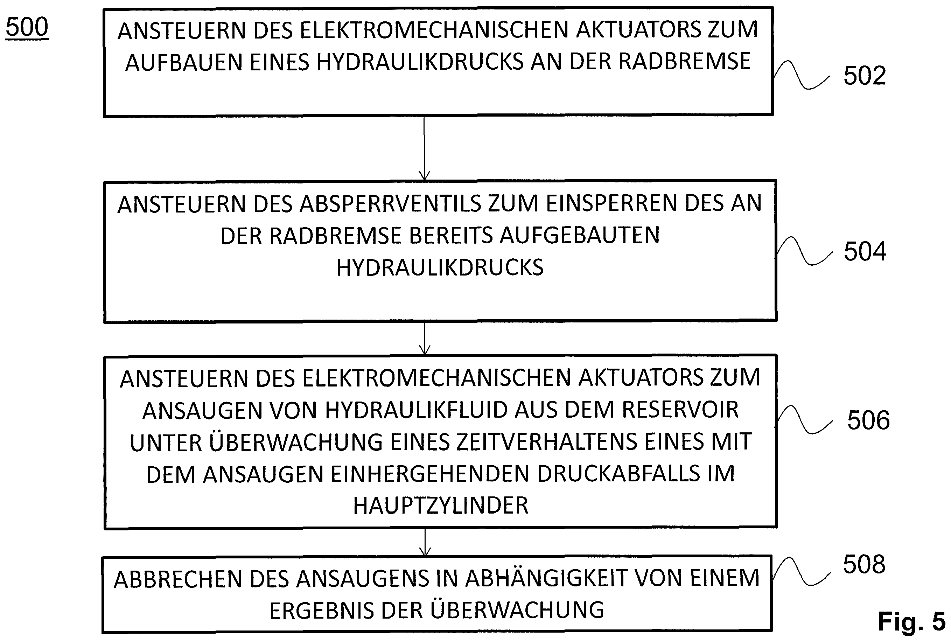

Fig. 5 veranschaulicht in einem Flussdiagramm 500 ein Ausführungsbeispiel für das Betreiben der elektrohydraulischen Bremsanlage 100 gemäß einer der Fign. 1 bis 4 für eine Fehlererkennung beim Nachfüllen von Hydraulikfluid aus dem Reservoir 120 in den Hauptzylinder 110.

Zunächst wird durch Ansteuern des elektromechanischen Aktuators 124 in Schritt 502 ein Hydraulikdruck an einer oder mehreren der Radbremsen VL, VR, HL und HR aufgebaut (z.B. bei einer Betriebsbremsung und/oder einem Fahrdynamikregelvorgang). Dabei ist die Fluidverbindung zwischen den Hydraulikkammern 116, 118 einerseits und den entsprechenden Radbremsen VL, VR, HL und HR geöffnet. Dies entspricht beispielsweise im Ausführungsbeispiel gemäß Fig. 2 einem geöffneten Zustand einer oder mehrerer der Multiplex-Ventile 152, 154, 156, 158. Im Ausführungsbeispiel gemäß Fig. 4 ist wenigstens eines der TCISO-Ventile geöffnet (und die verbleibenden Ventile befinden sich in der in Fig. 4 veranschaulichten Stellung).

Die folgenden Schritte werden zur Fehlererkennung durchgeführt, wenn im Rahmen des Hydraulikdruckaufbaus in Schritt 502 Hydraulikfluid aus dem Reservoir 120 in den Hauptzylinder 110 angesaugt werden muss (Nachfüllvorgang). Wie bereits erläutert, kann ein solcher Ansaugvorgang beispielsweise im Fading-Fall bei nicht ausreichender Volumenreserve im Hauptzylinder 110 erfolgen.

Dabei werden zunächst die geöffneten Absperrventile (Multiplex-Ventile 152, 154, 156, 158 gemäß Fig. 2 oder TCISO-Ventile gemäß Fig. 4) angesteuert, um diese zu schließen und den an den Radbremsen VL, VR, HR und HL bereits aufgebauten Hydraulikdruck einzusperren (Schritt 504). Nach dem Schließen der Absperrventile wird der elektromechanische Aktuator 124 angesteuert, um Hydraulikfluid aus dem drucklose Reservoir 120 in die Hydraulikkammern 116, 118 anzusaugen (Schritt 506). Im Zusammen mit der Ansteuerung des Aktuators oder kurz danach wird wenigstens eines der Ventile 170, 172 geöffnet, um eine Fluidverbindung zwischen wenigstens einer der Hydraulikkammern 116, 118 und dem Reservoir 120 herzustellen. Wie bereits erläutert, ist aufgrund der schwimmenden Lagerung der Hauptzylinder-Kolben 112, 114 das Öffnen eines der Ventile 170, 172 ausreichend.

Die Ansteuerung des elektromechanischen Aktuators 124 bewirkt ein Verschieben der Hauptzylinder-Kolben 112, 114 nach links (vgl. Fign. 1 bis 4). Aufgrund der sehr hohen Steifigkeit der Bremsleitungen fällt der Hydraulikdruck (im Hauptzylinder 110) innerhalb von wenigen ms sehr stark ab. So ist typischerweise innerhalb von 10 bis 20 ms ein Abfall des Hydraulikdrucks auf annähernd 0 bar oder auf einen Unterdruck die Regel.

Das Zeitverhalten des mit dem Ansaugen einhergehenden Druckabfalls im Hauptzylinder 110 wird (beispielsweise mittels des Drucksensors 122) fortlaufend überwacht. Ist eines der Absperrventile nicht oder nicht vollständig geschlossen, so ergibt sich eine wesentlich geringere Steifigkeit des Bremssystems 100. Aus dieser geringeren Steifigkeit resultiert ein langsamerer Druckabbau im Hauptzylinder 110. So werden in einem typischen Fehlerfall 100 ms und mehr benötigt, bis der Hydraulikdruck im Hauptzylinder 110 auf im Wesentlichen 0 bar oder auf einen Unterdruck absinkt. Dies bedeutet, dass nach spätestens 10 bis 20 ms ein nicht regulärer Druckabfall im Hauptzylinder 110 erkannt werden kann.

Wird daher im Rahmen der Überwachung des zeitlichen Verhaltens des Druckabfalls im Hauptzylinder ein Fehlerfall erkannt, wird der Ansaugvorgang abgebrochen (Schritt 508). Im Fehlerfall kann dann das geöffnete Ventil 170, 172 sofort wieder geschlossen werden, oder es wird gar nicht erst geöffnet. Ferner kann der elektromechanische Aktuator 124 angesteuert werden, um den Hydraulikdruck in den Bremskreisen I. und II. schnellstmöglich wenigstens auf das vorhergehende Niveau wieder anzuheben. Dieser Ansteuerung des elektromechanischen Aktuators 124 geht ein Öffnen der geschlossenen Absperrventile zu den Radbremsen VL, VR, HL und HR voraus. Im Ergebnis kann daher im Fehlerfall eine substanzielle Verringerung der Fahrzeugverzögerung verhindert werden. Ferner kann eine Fehlermeldung an den Fahrer ausgegeben werden.

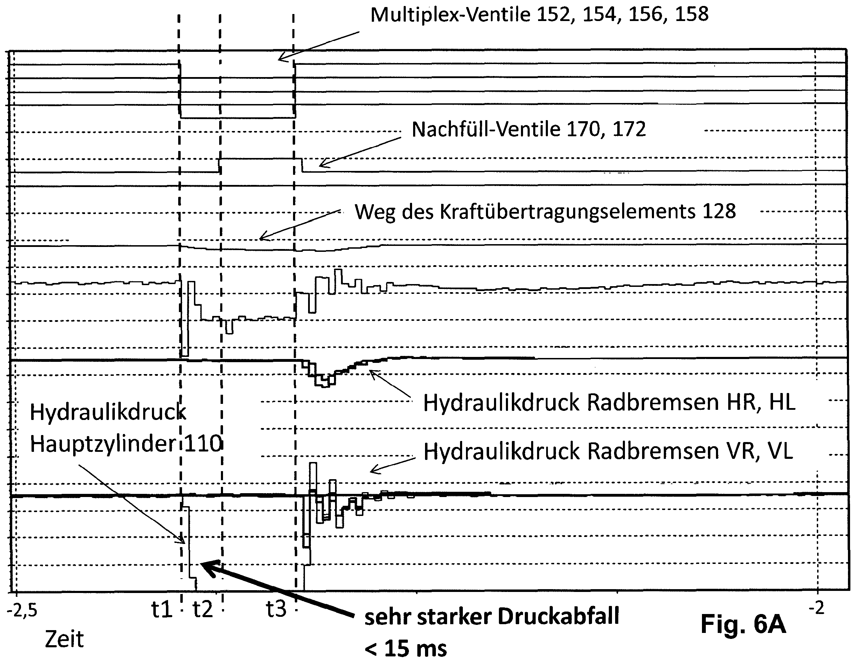

Nachfolgend wird unter Bezugnahme auf die Fign. 6A bis 6D der Verlauf verschiedener Hydraulikdrücke im Normalfall sowie im Fehlerfall erläutert.

Fig. 6A zeigt ein beispielhaftes Nachfüll-Szenario für ein sich im Stillstand befindliches Fahrzeug im Rahmen einer Testphase. Das Szenario betrifft die Kraftfahrzeug-Bremsanlage gemäß Fig. 3, die mit den vier Multiplex-Ventilen 152, 154, 156 und 158 gemäß Fig. 2 ausgestattet ist. Die Schaltzustände der Multiplex-Ventile 152, 154, 156, 158 sind im Diagramm ganz oben dargestellt, gefolgt von den Schaltzuständen der Ventile 170, 172 für den Nachfüllbetrieb. Es folgt die Kennlinie eines Wegs des Kraftübertragungselements 128, welche die Betätigung des elektromechanischen Aktuators 124 veranschaulicht. Der Weg des Kraftübertragungselements 128 entspricht hier dem Weg der Gewindespindel 138. Die folgenden Kennlinien zeigen den Hydraulikdruck an den Radbremsen HR, HL der Hinterradachse, der Radbremsen VR, VL der Vorderradachse sowie den Hydraulikdruck im Hauptzylinder 110.

Fig. 6A betrifft den Fall einer fehlerfreien Funktionsweise der Multiplex-Ventile 152, 154, 156, 158. In Fig. 6A nicht dargestellt ist die anfängliche Ansteuerung des elektromechanischen Aktuators 124 zum Aufbauen eines Hydraulikdrucks an den vier Radbremsen VR, VL, HR und HL. Zum Zeitpunkt t1 wird dann zu Testzwecken ein Nachfüllvorgang initiiert. Dazu werden zunächst die Multiplex-Ventile 152, 154, 156, 158 angesteuert, um diese zu schließen. Damit wird der im Vorfeld erzeugte Hydraulikdruck an den Radbremsen VL, VR, HL und HR eingesperrt.

Kurz danach wird der elektromechanische Aktuator 124 angesteuert, damit die Hauptzylinderkolben 112, 114 einen Rückhub durchführen. Dies ist in Fig. 6A durch den Weg des Kraftübertragungselements 128 veranschaulicht. Aufgrund der hohen Steifigkeit des Bremssystems 100, welche mit der Funktionsfähigkeit der geschlossenen Ventile 152, 154, 156, 158 zusammenhängt, sinkt der Hydraulikdruck im Hauptzylinder innerhalb von weniger als 15 ms stark auf im Wesentlichen 0 bar ab. Dieses zeitliche Vehalten des Hauptzylinder-Hydraulikdrucks weist auf eine Funktionsfähigkeit der Ventile 152, 154, 156, 158 hin. Aus diesem Grund können mit einer gewissen Verzögerung zum Zeitpunkt t2 die Ventile 170, 172 (oder wenigstens eines dieser beiden Ventile) geöffnet werden, um Hydraulikfluid aus dem drucklosen Reservoir 120 anzusaugen. Die Hauptzylinder-Kolben 112, 114, befinden sich dabei weiter im Rückhub.

Zum Zeitpunkt t3 ist dann der Ansaugvorgang im Wesentlichen beendet. In Folge dessen befinden sich beide Ventile 170, 172 wieder in ihrem geschlossenem Zustand. Mit anderen Worten ist der Hauptzylinder 110 vom Reservoir 120 wieder fluidisch entkoppelt. Ferner können die Ventile 152, 154, 156, 158 wieder geöffnet werden, was sich in einem nur leichten Druckabfall an den Radbremsen, VL, VR, HL und HR bemerkbar macht. Ab diesem Zeitpunkt kann der Hydraulikdruck im Hauptzylinder 110 durch einen entsprechenden Förderhub der Hauptzylinder-Kolben 112, 114 wieder erhöht werden.

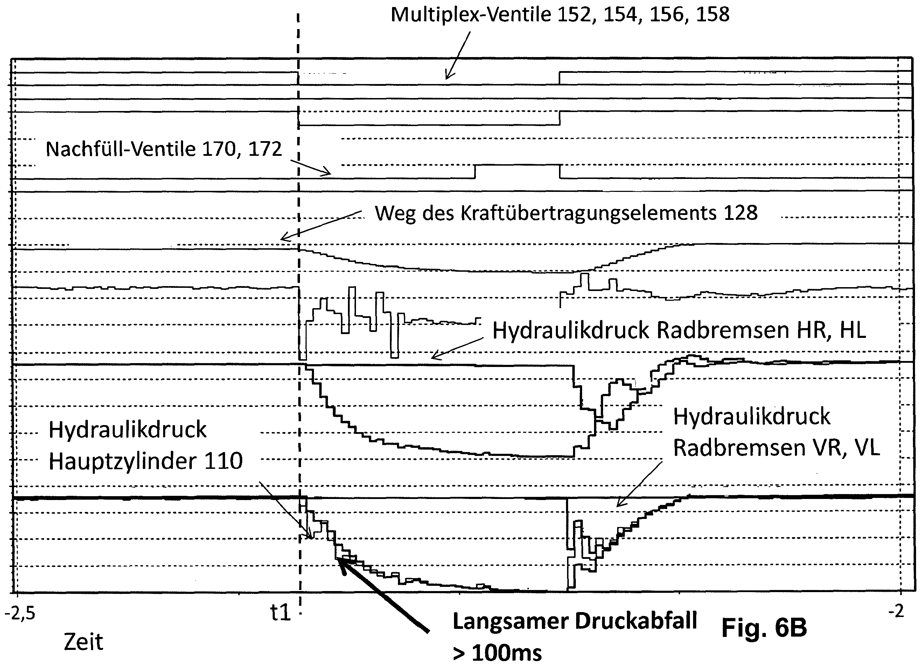

Während des Szenario gemäß Fig. 6A die Funktionsfähigkeit der Ventile 152, 154, 156, 158 belegt, zeigt Fig. 6B das Abbrechen eines Ansaugvorgangs im Fehlerfall. Der Fehlerfall betrifft die Tatsache, dass zwei der vier Multiplex-Ventile 152, 154, 156, 158 nicht geschlossen werden können. Aufgrund dessen ist die Steifigkeit der Bremsanlage 100 deutlich reduziert, was sich in einem vergleichsweise langsamen Druckabfall im Hauptzylinder 110 bemerkbar macht. Der Druckabfall auf im Wesentlichen 0 bar zieht sich über mehr als 100 ms hinweg. Gleichzeitig kommt es aufgrund der zwei fehlerhaften Ventile zu einem starken Druckabfall an einer Radbremse der Vorderachse sowie einer Radbremse der Hinterachse, die diesen defekten Ventilen zugeordnet sind.

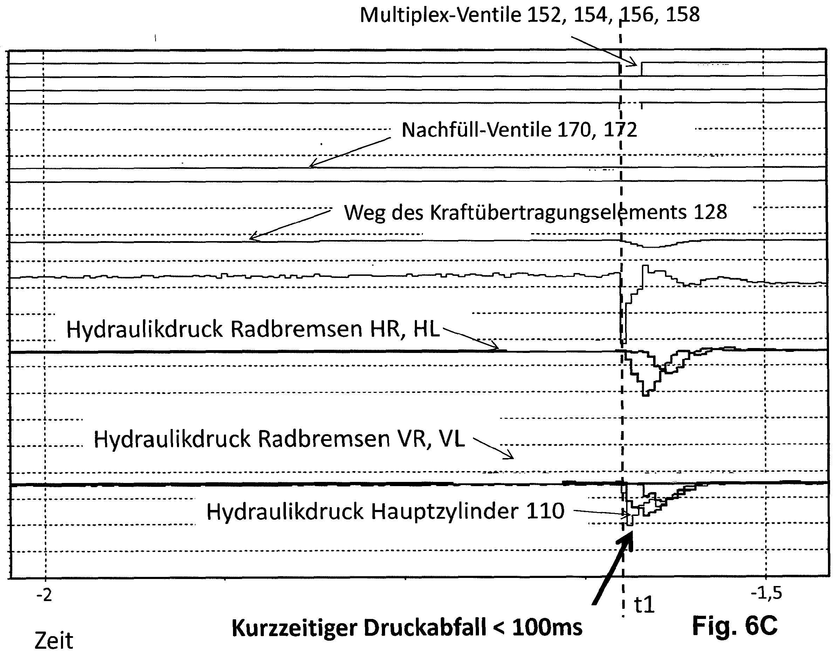

Fig. 6C zeigt einen ähnlichen Fehlerfall wie Fig. 6B, nur wird hier der Ansaugvorgang zum Nachfüllen des Hauptzylinders 110 unmittelbar nach Erkennen des Fehlerfalls abgebrochen. Aus diesem Grund sinken die Hydraulikdrücke an denjenigen Radbremsen, welche den beiden fehlerhaften Multiplex-Ventilen zugeordnet sind, nur kurzzeitig und geringfügig ab. Die entsprechende Verzögerungsabnahme des Fahrzeugs beträgt weniger als 0,2 g innerhalb von 200 ms. Ferner beträgt der Hydraulikdruckabbau im Hauptzylinder 110 deutlich weniger als 20 bar, bevor durch einen Förderhub der Hauptzylinder-Kolben 112, 114 der Druckabfall wieder kompensiert wird.

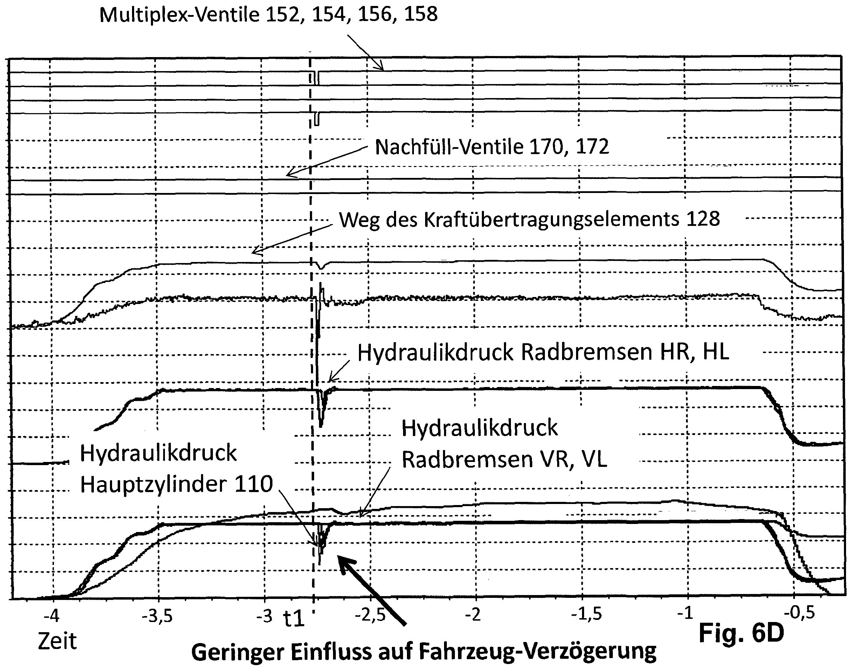

Fig. 6D zeigt ein ähnliches Szenario wie Fig. 6C. Auch hier wird aufgrund eines zu langsamen Druckabfalls im Hauptzylinder 110 der Ansaugvorgang unterbrochen. Wie sowohl in Fig. 6C als auch in Fig. 6D veranschaulicht, wird in beiden Szenarien der Fehlerfall erkannt, bevor auch nur eines der Ventile 170, 172 geöffnet und damit ein "hydraulischer Kurzschluss" zwischen dem Hauptzylinder 110 und dem Fluidreservoir 120 hergestellt wird.

Während die Fign. 6A bis 6C die Testphase im Fall eines stehenden Fahrzeugs veranschaulichen, betrifft Fig. 6D den Fall eines fahrenden und dabei konstant verzögerten Fahrzeugs. Deutlich zu erkennen ist die Tatsache, dass aufgrund des rechtzeitigen Abbruchs des Ansaugvorgangs sich praktisch keine negative Auswirkung auf die Fahrzeug-Verzögerung ergibt.

Insgesamt kann die hier vorgestellte Technik damit gewährleisten, dass fehlerhafte Ventile oder fehlerhafte Ventilansteuerungen sicher erkannt werden können. Darüber hinaus ergibt sich ein Sicherheitszuwachs für Nachfüllvorgänge. Aufgrund dieses Sicherheitszuwachses können Hauptzylinder grundsätzlich mit geringeren Volumenreserven ausgelegt werden.

## Patentansprüche

1. Verfahren für das Betreiben einer elektrohydraulischen Kraftfahrzeug-Bremsanlage (100) mit einer aus einem Reservoir (120) mit Hydraulikfluid versorgbaren Zylinder-Kolben-Einrichtung (110), einem elektromechanischen Aktuator (124) zur Betätigung eines in der Zylinder-Kolben-Einrichtung (110) aufgenommenen Kolbens (112; 114), einer mit der Zylinder-Kolben-Einrichtung (110) koppelbaren Radbremse und einem zwischen der Zylinder-Kolben-Einrichtung (110) und der Radbremse vorgesehenen Absperrventil (TCISO; 152, 154, 156, 158), umfassend die Schritte:
Ansteuern des elektromechanischen Aktuators (124) zum Aufbauen eines Hydraulikdrucks an der Radbremse;
Ansteuern des Absperrventils (TCISO; 152, 154, 156, 158) zum Einsperren des an der Radbremse bereits aufgebauten Hydraulikdrucks;
Ansteuern des elektromechanischen Aktuators (124) zum Ansaugen von Hydraulikfluid aus dem Reservoir (120) unter Überwachung eines Zeitverhaltens eines mit dem Ansaugen einhergehenden Druckabfalls in der Zylinder-Kolben-Einrichtung(110); und
Abbrechen des Ansaugens in Abhängigkeit von einem Ergebnis der Überwachung.

2. Verfahren nach Anspruch 1, wobei
das Ansaugen dann abgebrochen wird, wenn das Ergebnis der Überwachung auf eine mangelnde Funktionsfähigkeit des Absperrventils (TCISO; 152, 154, 156, 158) oder einer Ansteuerung (150) des Absperrventils (TCSIO; 152, 154, 156, 158) hinweist.

3. Verfahren nach Anspruch 1 oder 2, wobei
das Ansaugen dann abgebrochen wird, wenn der Druckabfall langsamer als gemäß einem vorgegebenen zeitlichen Kriterium erfolgt, wobei
das vorgegebene zeitliche Kriterium vorzugsweise besagt, dass der Druckabfall auf einen im Wesentlichen drucklosen Zustand innerhalb von ungefähr 5 bis 50 ms erfolgen muss.

4. Verfahren nach einem der vorhergehenden Ansprüche, wobei
das Ansaugen abgebrochen wird, bevor der Druckabfall ungefähr 10 bis 40 bar beträgt.

5. Verfahren nach einem der vorhergehenden Ansprüche, wobei
im Zusammenhang mit dem Abbrechen des Ansaugens das Absperrventil (TCISO; 152, 154, 156, 158) angesteuert wird, um dieses zu öffnen; und/oder wobei
im Zusammenhang mit dem Abbrechen des Ansaugens der elektromechanische Aktuator (124) zum Erhöhen des Hydraulikdrucks angesteuert wird.

6. Verfahren nach einem der vorhergehenden Ansprüche, wobei
das Verfahren im Rahmen einer Testphase durchgeführt wird, in der sich das Fahrzeug im Stillstand befindet.

7. Computerprogrammprodukt mit Programmcodemitteln die das Verfahren nach einem der vorhergehenden Ansprüche durchführen, wenn das Computerprogrammprodukt auf einem Prozessor abläuft.

8. Kraftfahrzeug-Steuergerät oder -Steuergerätesystem, umfassend das Computerprogrammprodukt nach Anspruch 7.

9. Elektrohydraulische Kraftfahrzeug-Bremsanlage (100), umfassend:
eine aus einem Reservoir (120) mit Hydraulikfluid versorgbare Zylinder-Kolben-Einrichtung (110);
einen elektromechanischen Aktuator (124) zur Betätigung eines in der Zylinder-Kolben-Einrichtung (110) aufgenommenen Kolbens (112; 114);
eine mit der Zylinder-Kolben-Einrichtung (110) koppelbare Radbremse;
ein zwischen der Zylinder-Kolben-Einrichtung (110) und der Radbremse vorgesehenes Absperrventil; und
ein Steuergerät oder Steuergerätesystem (150), das ausgebildet ist zum
- Ansteuern des elektromechanischen Aktuators (124) zum Aufbauen eines Hydraulikdrucks an der Radbremse;
- Ansteuern des Absperrventils (TCISO; 152, 154; 156; 158) zum Einsperren des an der Radbremse bereits aufgebauten Hydraulikdrucks;
- Ansteuern des elektromechanischen Aktuators (124) zum Ansaugen von Hydraulikfluid aus dem Reservoir (120) unter Überwachung eines Zeitverhaltens eines mit dem Ansaugen einhergehenden Druckabfalls in der Zylinder-Kolben-Einrichtung(110); und
- Abbrechen des Ansaugens in Abhängigkeit von einem Ergebnis der Überwachung.

10. Bremsanlage nach Anspruch 9, ferner umfassend
ein Ventilsystem (106) zur Fahrdynamikregelung, wobei das Absperrventil (TCISO; 152 ,154, 156, 158) zwischen der Zylinder-Kolben-Einrichtung (110) und dem Ventilsystem (106) zur Fahrdynamikregelung angeordnet ist oder ein Teil dieses Ventilsystems (106) ist.

11. Bremsanlage nach Anspruch 9, wobei
das Absperrventil (152) zusammen mit weiteren Absperrventilen (154, 156, 158), die weiteren Radbremsen zugeordnet sind, im Multiplexbetrieb betreibbar ist, um eine Fahrdynamikregelung durchzuführen.

12. Bremsanlage nach Anspruch 10 oder 11, wobei
die Fahrdynamikregelung mindestens eines der folgenden Regelsysteme umfasst: ein Antiblockiersystem, ABS, ein Antriebsschlupfregelsystem, ASR, und ein elektronisches Stabilitätsprogramm, ESP.

13. Vorrichtung nach einem der Ansprüche 9 bis 12, wobei
die Zylinder-Kolben-Einrichtung (110) derart dimensioniert ist, dass si keine Volumenreserve zur Kompensation von Fading besitzt.

14. Vorrichtung nach einem der Ansprüche 9 bis 13, ferner umfassend
einen mit einem Bremspedal (130) koppelbaren oder gekoppelten mechanischen Aktuator (126) zur Betätigung des in der Zylinder-Kolben-Einrichtung (110) aufgenommenen Kolbens (112, 114).

15. Vorrichtung nach einem der Ansprüche 9 bis 14, wobei
die Zylinder-Kolben-Einrichtung ein Hauptzylinder (110) der
Bremsanlage (100) ist.

## Claims

1. Method for operating an electrohydraulic motor vehicle brake system (100) having a cylinder-piston arrangement (110) that can be supplied with hydraulic fluid from a reservoir (120), an electromechanical actuator (124) for actuating a piston (112; 114) accommodated in the cylinder-piston arrangement (110), a wheel brake that can be coupled to the cylinder-piston arrangement (110), and a shut-off valve (TCISO; 152, 154, 156, 158) provided between the cylinder-piston arrangement (110) and the wheel brake, comprising the steps of:
activating the electromechanical actuator (124) for generating a hydraulic pressure at the wheel brake;
activating the shut-off valve (TCISO; 152, 154, 156, 158) for locking the hydraulic pressure already generated at the wheel brake;
activating the electromechanical actuator (124) for an intake of hydraulic fluid from the reservoir (120) while monitoring a temporal behaviour of a pressure drop in the cylinder-piston arrangement (110) that accompanies the intake; and
terminating the intake dependent on a result of the monitoring.

2. Method according to claim 1, wherein
the intake is terminated when the result of the monitoring indicates a lack of operability of the shut-off valve (TCISO; 152, 154, 156, 158) or activation (150) of the shut-off valve (TCISO; 152, 154, 156, 158).

3. Method according to claim 1 or 2, wherein
the intake is terminated when the pressure drop takes place more slowly than according to a specified time criterion, wherein
the specified time criterion preferably states that the pressure drop to a substantially pressureless state must take place within approximately 5 to 50 ms.

4. Method according to any one of the preceding claims, wherein
the intake is terminated before the pressure drop is approximately 10 to 40 bar.

5. Method according to any one of the preceding claims, wherein
in connection with the terminating of the intake, the shut-off valve (TCISO; 152, 154, 156, 158) is activated in order to open it, and/or
wherein
in connection with the terminating of the intake, the electromechanical actuator (124) is activated to increase the hydraulic pressure.

6. Method according to any one of the preceding claims, wherein
the method is carried out within the context of a test phase in which the vehicle is at a standstill.

7. Computer program product having program code means, which perform the method according to any one of the preceding claims when the computer program procudct is running on a processor.

8. Motor vehicle control unit or control unit system comprising the computer program product according to claim 7.

9. Electrohydraulic motor vehicle brake system (100), comprising:
a cylinder-piston arrangement (110) that can be supplied with hydraulic fluid from a reservoir (120);
an electromechanical actuator (124) for actuating a piston (112; 114) accommodated in the cylinder-piston arrangement (110);
a wheel brake that can be coupled to the cylinder-piston arrangement (110);
a shut-off valve provided between the cylinder-piston arrangement (110) and the wheel brake; and
an electronic control unit or electronic control unit system (150) which is configured to
- activate the electromechanical actuator (124) for generating a hydraulic pressure at the wheel brake;
- activate the shut-off valve (TCISO; 152, 154; 156; 158) for locking the hydraulic pressure already generated at the wheel brake;
- activate the electromechanical actuator (124) for an intake of hydraulic fluid from the reservoir (120) while monitoring a temporal behaviour of a pressure drop in the cylinder-piston arrangement (110) that accompanies the intake; and
- terminate the intake dependent on a result of the monitoring.

10. Brake system according to claim 9, further comprising:
a valve system (106) for vehicle dynamics control, wherein the shut-off valve (TCISO; 152, 154, 156, 158) is arranged between the cylinder-piston arrangement (110) and the valve system (106) for vehicle dynamics control or is part of that valve system (106).

11. Brake system according to claim 9, wherein
the shut-off valve (152), together with further shut-off valves (154, 156, 158) which are assigned to further wheel brakes, can be operated in multiplex operation in order to carry out vehicle dynamics control.

12. Brake system according to claim 10 or 11, wherein
the vehicle dynamics control comprises at least one of the following control systems: an anti-lock brake system, ABS, a traction control system, TCS, and an electronic stability program, ESP.

13. Apparatus according to any one of claims 9 to 12, wherein
the dimensions of the cylinder-piston arrangement (110) are such that it has no volume reserve to compensate for fading.

14. Apparatus according to any one of claims 9 to 13, further comprising
a mechanical actuator (126) which can be coupled or is coupled to a brake pedal (130), for actuating the piston (112, 114) accommodated in the cylinder-piston arrangement (110).

15. Apparatus according to any one of claims 9 to 14, wherein
the cylinder-piston arrangement is a master cylinder (110) of the brake system (100).

## Revendications

1. Procédé de fonctionnement d'un système de freinage électrohydraulique de véhicule automobile (100) comprenant un dispositif à cylindre et piston (110) pouvant être alimenté en fluide hydraulique à partir d'un réservoir (120), un actionneur électromécanique (124) pour actionner un piston (112 ; 114) logé dans le dispositif à cylindre et piston (110), un frein de roue pouvant être accouplé au dispositif à cylindre et piston (110) et une vanne d'arrêt (TCISO ; 152, 154, 156, 158) prévue entre le dispositif à cylindre et piston (110) et le frein de roue, comprenant les étapes de :
commande de l'actionneur électromécanique (124) pour établir une pression hydraulique sur le frein de roue ;
commande de la vanne d'arrêt (TCISO ; 152, 154, 156, 158) pour enfermer la pression hydraulique déjà établie sur le frein de roue ;
commande de l'actionneur électromécanique (124) pour aspirer du fluide hydraulique du réservoir (120) en surveillant un comportement dans le temps d'une chute de pression dans le dispositif à cylindre et piston (110) concomitante à l'aspiration ; et
interruption de l'aspiration en fonction d'un résultat de la surveillance.

2. Procédé selon la revendication 1, dans lequel
l'aspiration est interrompue lorsque le résultat de la surveillance indique une absence de capacité de fonctionnement de la vanne d'arrêt (TCISO ; 152, 154, 156, 158) ou d'une commande (150) de la vanne d'arrêt (TCSIO ; 152, 154, 156, 158).

3. Procédé selon la revendication 1 ou 2, dans lequel
l'aspiration est interrompue lorsque la chute de pression est plus lente que selon un critère temporel prédéfini,
le critère temporel prédéfini stipulant de préférence que la chute de pression à un état sensiblement sans pression doit avoir lieu dans un délai d'environ 5 à 50 ms.

4. Procédé selon l'une des revendications précédentes, dans lequel
l'aspiration est interrompue avant que la chute de pression n'atteigne environ 10 à 40 bars.

5. Procédé selon l'une des revendications précédentes, dans lequel
en relation avec l'interruption de l'aspiration, la vanne d'arrêt (TCISO ; 152, 154, 156, 158) est commandée en vue de son ouverture ; et/ou dans lequel
en relation avec l'interruption de l'aspiration, l'actionneur électromécanique (124) est commandé pour élever la pression hydraulique.

6. Procédé selon l'une des revendications précédentes, dans lequel
le procédé est mis en oeuvre dans le cadre d'une phase de test dans laquelle le véhicule est à l'arrêt.

7. Produit programme d'ordinateur avec des moyens de codage de programme qui mettent en oeuvre le procédé selon l'une des revendications précédentes lorsque le produit programme d'ordinateur est exécuté sur un processeur.

8. Module de commande ou système de modules de commande de véhicule automobile, comprenant le produit programme d'ordinateur selon la revendication 7.

9. Système de freinage électrohydraulique de véhicule automobile (100), comprenant :
un dispositif à cylindre et piston (110) pouvant être alimenté en fluide hydraulique à partir d'un réservoir (120) ;
un actionneur électromécanique (124) pour actionner un piston (112 ; 114) logé dans le dispositif à cylindre et piston (110) ;
un frein de roue pouvant être accouplé au dispositif à cylindre et piston (110) ;
une vanne d'arrêt prévue entre le dispositif à cylindre et piston (110) et le frein de roue ; et
un module de commande ou système de modules de commande (150) conçu pour
- commander l'actionneur électromécanique (124) pour établir une pression hydraulique sur le frein de roue ;
- commander la vanne d'arrêt (TCISO ; 152, 154 ; 156 ; 158) pour enfermer la pression hydraulique déjà établie sur le frein de roue ;
- commander l'actionneur électromécanique (124) pour aspirer du fluide hydraulique du réservoir (120) en surveillant un comportement dans le temps d'une chute de pression dans le dispositif à cylindre et piston (110) concomitante à l'aspiration ; et
- interrompre l'aspiration en fonction d'un résultat de la surveillance.

10. Système de freinage selon la revendication 9, comprenant en outre
un système de vannes (106) pour la régulation de la dynamique de conduite, la vanne d'arrêt (TCISO ; 152, 154, 156, 158) étant disposée entre le dispositif à cylindre et piston (110) et le système de vannes (106) pour la régulation de la dynamique de conduite ou étant une partie de ce système de vannes (106).

11. Système de freinage selon la revendication 9, dans lequel
la vanne d'arrêt (152) ainsi que d'autres vannes d'arrêt (154, 156, 158) associées à d'autres freins de roue peuvent fonctionner en mode multiplex pour effectuer une régulation de la dynamique de conduite.

12. Système de freinage selon la revendication 10 ou 11, dans lequel
la régulation de la dynamique de conduite comprend au moins un des systèmes de régulation suivants : un système de freinage antiblocage, ABS, un système de régulation antipatinage, ASR, et un programme de stabilité électronique, ESP.

13. Dispositif selon l'une des revendications 9 à 12, dans lequel
le dispositif à cylindre et piston (110) est dimensionné de telle façon qu'il ne possède pas de réserve de volume pour la compensation du fading.

14. Dispositif selon l'une des revendications 9 à 13, comprenant en outre
un actionneur mécanique (126) accouplé ou pouvant être accouplé à une pédale de frein (130) pour actionner le piston (112, 114) logé dans le dispositif à cylindre et piston (110).

15. Dispositif selon l'une des revendications 9 à 14, dans lequel
le dispositif à cylindre et piston est un maître-cylindre (110) du système de freinage (100).
